(19) Europäisches Patentamt
European Patent Office
Office européen des brevets

(11) EP 1 752 502 A1

(12) EUROPEAN PATENT APPLICATION
published in accordance with Art. 158(3) EPC

(43) Date of publication:
14.02.2007 Bulletin 2007/07

(21) Application number: 05743619.8

(22) Date of filing: 26.05.2005

(51) Int Cl.:
*C09D 11/00* (2006.01) *B41J 2/01* (2006.01)
*B41M 5/00* (2006.01)

(86) International application number:
PCT/JP2005/009621

(87) International publication number:
WO 2005/116151 (08.12.2005 Gazette 2005/49)

(84) Designated Contracting States:
DE GB IT

(30) Priority: 31.05.2004 JP 2004160747

(71) Applicant: Konica Minolta Medical & Graphic, Inc.
Tokyo 163-0512 (JP)

(72) Inventors:
- FUKAWA, Junichi
c/o Konica Minolta M. & G., Inc.
Tokyo 1918511 (JP)
- MASUMI, Satoshi
c/o Konica Minolta M. & G., Inc.
Tokyo 1928505 (JP)

(74) Representative: Rees, Alexander Ellison et al
Urquhart-Dykes & Lord LLP
30 Welbeck Street
London W1G 8ER (GB)

# (54) ACTIVE RAY-CURABLE INKJET INK, METHOD FOR STORING ACTIVE RAY-CURABLE INKJET INK, IMAGE FORMING METHOD, AND INKJET RECORDING DEVICE

(57) An actinic radiation curable type inkjet ink is **characterized in that** the actinic radiation curable type inkjet ink contains an onium salt as a photolytically acid generating compound that does not produce benzene when exposed to actinic radiation, and a compound including an oxetane ring as a photo-polymerizable compound, wherein a water content by Karl Fischer method is 1.50 through 5.00 percent by mass.

EP 1 752 502 A1

## Description

## TECHNICAL FIELD

The present invention relates to an actinic radiation curable inkjet ink capable of reproducing a stable high-definition image on various types of recording materials, a method of storing the aforementioned actinic radiation curable inkjet ink, an image forming method, and an inkjet recording apparatus.

## BACKGROUND ART

The inkjet recording method in recent years provides simple and economical formation of an image and has been employed in a great variety of printing fields such as photographing, various forms of printing, marking and special printing on color filter. Especially, the image quality comparable to that of silver halide photography can be provided by using a recording apparatus emitting and controlling fine dots, ink with its color reproduction gamut, durability and emission suitability having been improved, and the special-purpose paper characterized by drastic improvement of the ink absorbency, color development of the coloring material and surface gloss. The present-day improvement of the image quality in the inkjet recording method depends on the improvements of all the recording apparatus, ink and special-purpose paper.
However, the inkjet system requiring the use of special-purpose paper has problems of the limited type of recording media and increased price of the recording media. To solve these problems, a great number of attempts have been made to record on the transferred medium different from the special-purpose paper according to the inkjet method. To put it more specifically, such attempts are exemplified by the phase-change inkjet method of using solid wax ink at a room temperature, the solvent-based inkjet method of using the ink mainly made of fast drying organic solvent, and the UV inkjet method of utilizing ultraviolet rays (UV) to provide crosslinking subsequent to recording.
Of these examples, the UV inkjet method is capturing the spotlight of the industry for its smaller offensive smell than the solvent-based inkjet method, fast drying property, and capability of recording on a recording medium without ink absorbency. For example, the ultraviolet curable type inkjet ink is disclosed in the Japanese Non-Examined Patent Publications Tokkohei 5-54667, Tokkaihei 6-200204 and Tokuhyo 2000-504778.
However, when these types of ink are used, there is a great change in the dot diameter subsequent to emission of ink particles, depending on the type of the recording material and working environment, and a high-definition image cannot be produced on a great variety of recording materials.
The ultraviolet curable type ink is available in two types; a radical polymerization type ultraviolet curable type ink mainly made up of acryl-based compositions, and a cationic polymerization type ultraviolet curable type ink. By the very nature of the polymerization mechanism, the radical polymerization type ultraviolet curable type ink is subjected to oxygen inhibition action where oxygen is present, and curability is poor. On the other hand, the ultraviolet curable type inkjet ink utilizing the cationic polymerization type compound has been proposed (e.g., Patent Documents 1 through 3). These ultraviolet curable type inkjet inks are not subjected to oxygen inhibition action, but have a problem of susceptibility to water (humidity) on the molecular level. To be more specific, for the actinic radiation curable inkjet ink composition using the cationic polymerizable compound described in the aforementioned Patent Documents 1 through 3, the UVR 6110 and UVR 6105 by Dow Chemical, Ltd. and Seroxide 2021 by Daicel Chemical Industries are often used as photo-polymerizable compounds. These compounds are subject to a big fluctuation in the emission stability and curability depending on the printing environment (e.g. temperature, humidity), and have a problem of being susceptible to water (humidity) on the molecule level. They also have a problem of easy progression of dark reaction and difficulties in storage.
[Patent Document 1] Japanese Non-Examined Patent Publication (Tokkai) 2001-220526 (Claims and Examples)
[Patent Document 2] Japanese Non-Examined Patent Publication (Tokkai) 2002-188025 (Claims and Examples)
[Patent Document 3] Japanese Non-Examined Patent Publication (Tokkai) 2002-317139 (Claims and Examples)

## DISCLOSURE OF THE INVENTION

The object of the present invention is to solve the aforementioned problems and to provide the method for storing the actinic radiation curable inkjet ink capable of recording a stable high-definition image characterized by excellent character quality without color mixing, and the image forming method using this method.
The aforementioned object of the present invention is achieved by the following structures:

(Item 1)

An actinic radiation curable inkjet ink containing an onium salt as a photolytically acid generating compound that does not produce benzene when exposed to actinic radiation, and a compound that includes an oxetane ring as a

photo-polymerizable compound, wherein moisture content by Karl Fischer method is 1.50 through 5.00 percent by mass.

(Item 2)

The actinic radiation curable inkjet ink described in Item 1 wherein the aforementioned actinic radiation curable inkjet ink contains a basic compound.

Formula (1)

$$WP \times WR/SR > 6.65$$

(Item 3)

The actinic radiation curable inkjet ink described in either Item 1 or 2 wherein the onium salt that does not produce the aforementioned benzene is a sulfonium salt.

(Item 4)

The actinic radiation curable inkjet ink described in either Item 1 or 2 wherein the onium salt that does not produce the aforementioned benzene is an iodonium salt.

(Item 5)

The actinic radiation curable inkjet ink described in Item 3 wherein the aforementioned sulfonium salt is at least one of the sulfonium salts selected from those expressed by the following general formulas [1] through [4].

[Chemical Formula 1]

General formula [1] General formula [2]

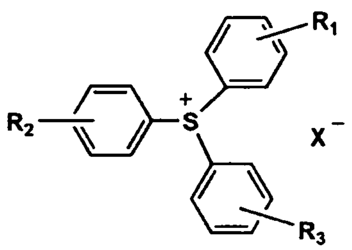

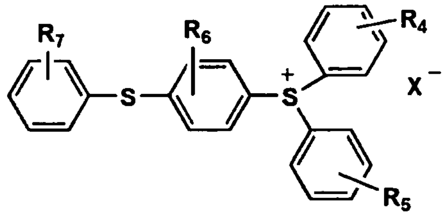

General formula [3]

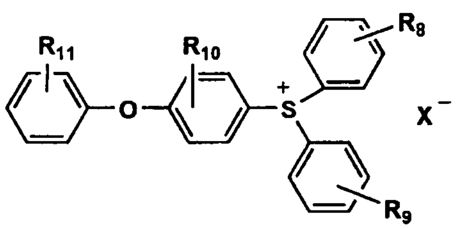

General formula [4]

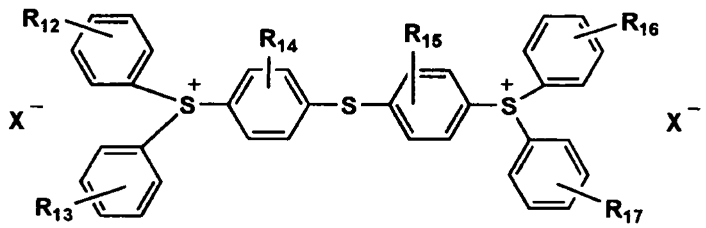

[In the formulas, $R_1$ through $R_{17}$ represent hydrogen atom or substituent, wherein $R_1$ through $R_3$ do not represent a hydrogen atom at the same time, $R_4$ through $R_7$ do not represent a hydrogen atom at the same time, $R_8$ through $R_{11}$ do not represent a hydrogen atom at the same time, and $R_{12}$ through $R_{17}$ do not represent a hydrogen atom at the same time. "X" represents non-nucleophilic anion residue.]

(Item 6)

The actinic radiation curable inkjet ink described in Item 5 wherein the sulfonium salt expressed by the aforementioned general formula [1] through [4] is at least one of the sulfonium salts selected according to the following general formulas [5] through [13].

[Chemical Formula 2]

General formula [5]

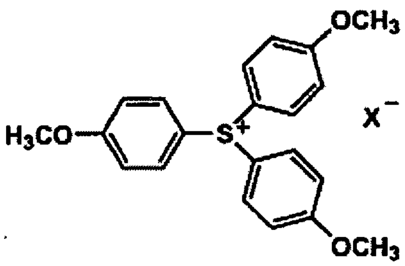

General formula [6]

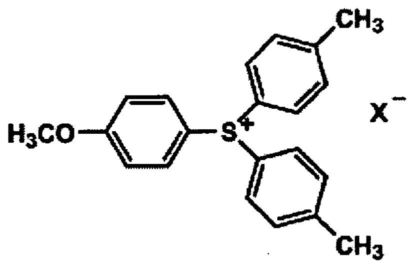

General formula [7]

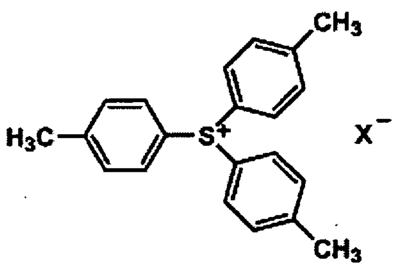

General formula [8]

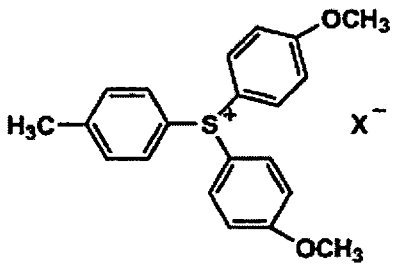

General formula [9]

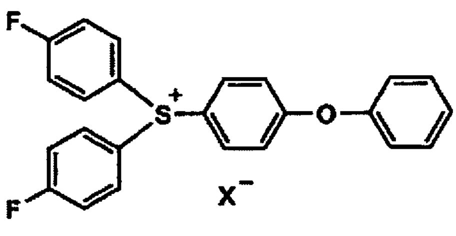

General formula [10]

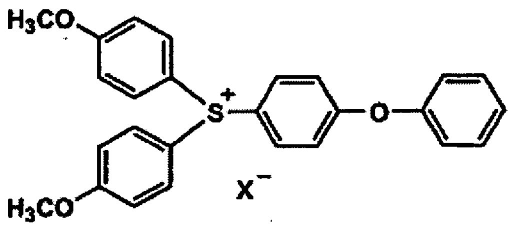

General formula [11]

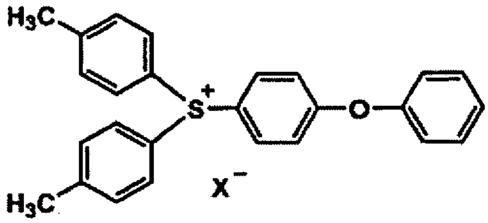

General formula [12]

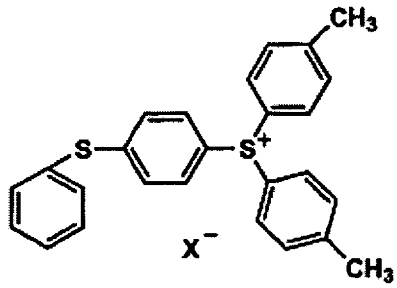

General formula [13]

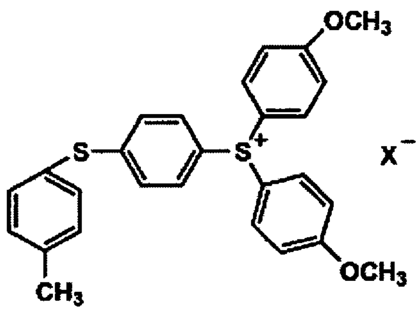

[In each of the formulas, "X" represents a non-nucleophilic anion residue.]

(Item 7)

The actinic radiation curable inkjet ink described in one of the Items 1 through 6 wherein a nonionic surface active agent is contained.

(Item 8)

The actinic radiation curable inkjet ink described in one of the Items 1 through 7 wherein a compound including at least one kind of an oxirane group is contained as the photo-polymerizable compound.

(Item 9)

The actinic radiation curable inkjet ink described in one of the Items 1 through 8, wherein 60 through 95 percent by mass of a compound including at least one kind of an oxetane rings, 5 through 40 percent by mass of a compound including at least one kind of an oxirane group, and 0 through 40 percent by mass of at least one kind of vinyl ether compounds are contained as the photo-polymerizable compound.

(Item 10)

The actinic radiation curable inkjet ink described in one of the Items 1 through 9, wherein the compound including the aforementioned oxetane ring is represented by the following general formula (E).

[Chemical Formula 3]

General formula (E)

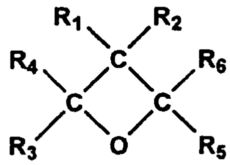

[In the formula, $R_1$ through $R_6$ represents a hydrogen atom or substituent wherein at least one of the groups expressed by $R_3$ through $R_6$ is a substituent.]

(Item 11)

The actinic radiation curable inkjet ink described in one of the Items 1 through 10 wherein the viscosity of the aforementioned actinic radiation curable inkjet ink at 25 °C is 7 through 50 mPa.s.

(Item 12)

An actinic radiation curable inkjet ink storage method wherein, when the actinic radiation curable inkjet ink described in any one of the aforementioned Items 1 and 11 is filled in a storage container and is stored therein, the conditions given by the following Equation (1) are met, when the water content of the aforementioned actinic radiation curable inkjet ink according to the Karl Fischer method is assumed as WR (%); the ratio (void ratio) of the volume of the gap obtained by removing the volume of the actinic radiation curable type inkjet recording ink from the internal volume of the aforementioned storage container, with respect to the interval volume of the aforementioned storage container is assumed as SR; and the vapor pressure of the aforementioned gap is WP (kPa).

Equation (1)

$$WP \times WR/SR > 6.65$$

(Item 13)

An image forming method wherein the actinic radiation curable inkjet ink described in any one of the aforementioned Items 1 and 11 is emitted onto a recording medium by the inkjet recording head to perform printing on the aforementioned recording medium, and actinic radiation is emitted within 0.001 through 2.0 seconds after the aforementioned actinic radiation curable inkjet ink has reached the aforementioned recording medium.

(Item 14)

An image forming method wherein the actinic radiation curable inkjet ink described in any one of the aforementioned Items 1 and 11 is emitted onto a recording medium by the inkjet recording head to perform printing on the aforementioned recording medium, and the overall ink film thickness is 2 through 20 μm after the aforementioned actinic radiation curable inkjet ink has reached the aforementioned recording medium.

(Item 15)

An image forming method wherein the actinic radiation curable inkjet ink described in any one of the aforementioned Items 1 and 11 is emitted onto a recording medium by the inkjet recording head to perform printing on the aforementioned recording medium, and the amount of ink particles emitted from each nozzle of the aforementioned

inkjet recording head is 2 through 15 pl.

(Item 16)

The inkjet recording apparatus used according to the image forming method described in any one of Items 13 through 15 wherein the actinic radiation curable inkjet ink and recording head are heated to 35 through 100 °C and the aforementioned actinic radiation curable inkjet ink is emitted thereafter by the aforementioned recording head.
The present invention provides: an actinic radiation curable inkjet ink capable of stable recording of a high-definition image characterized by excellent character quality without color mixing; a method for storing the aforementioned actinic radiation curable inkjet ink; an image forming method according to the aforementioned method; and an inkjet recording apparatus.

## BRIEF DESCRIPTION OF THE DRAWINGS

Fig. 1 is a front view representing an example of the structure of the major portions of the inkjet recording apparatus of the present invention; and
Fig. 2 is a top view representing another example of the structure of the major portions of the inkjet recording apparatus of the present invention.

## BEST MODE FOR CARRYING OUT THE INVENTION

The following describes the details of the best mode for carrying out the present invention:
The present inventors have made efforts to achieve the aforementioned object and have found the following: The adverse effect of water for long-term storage can be kept within a predetermined range and, as a result, stable recording of a high-definition image characterized by excellent character quality without color mixing is ensured by an actinic radiation curable inkjet ink according to the method for storing the actinic radiation curable inkjet ink (hereinafter referred to as "ink" in some cases), which contains the onium salt that does not produce benzene when exposed to actinic radiation, this onium being included as a photooxy-generating agent, and further contains the compound that includes an oxetane ring as a photo-polymerizable compound, wherein moisture content by Karl Fischer method is 1.50 through 5.00 percent by mass. This procedure permits implementation of the aforementioned an actinic radiation curable inkjet ink and method for storing this actinic radiation curable inkjet ink. This finding has led the present inventors to reach the present invention.
In the past, a cationic polymerizable ink composition was prepared employing a photo-induced acid generating agent (a photolytically acid generating agent) which generated benzene as a resolvent by active ray radiation (actinic radiation), examples of which typically included UV16992 (being a triarylsulfonium salt, produced by The Dow Chemical Company). However, this ink composition was hardly ever employed in the food industries due to generation of benzene, but also had the drawback of unstable ejection by environment (such as temperature and humidity). Therefore, it was impossible to form a high definition image with ink-jet recording using this ink composition. On the other hand, as an onium salt (being a photo-induced acid generating agent) which does not generate benzene, known are IRGACURE 250 (being a diaryliodonium, produced by Ciba Specialty Chemicals) and CI 5102 (being a diaryliodonium salt, produced by NIPPON SODA CO., LTD.). However, there have been no practical examples in use as an ink-jet ink composition which is capable of stable ejection employing an onium salt and not generating benzene by active ray radiation and including the above salts.
Specifically, in cases when the onium salt is employed in combination with an oxetane containing compound, ejection stability of the ink composition, which is considered to be a very important characteristics, is extremely enhanced, and the ink dot diameter after deposition onto a recording material can be easily controlled without influencing of curing conditions, resulting in formation of high definition images with good reproducibility. This is therefore a revolutionary constitution.
Further, in cases when the onium salt which does not generate benzene by active ray radiation is employed as a photo-induced acid generating agent, it is preferable that a nonionic surface active agent is simultaneously employed to further enhance ejection stability.
More preferable is for the ejection stability enhancement to contain, as potopolymerizable compounds, 25 - 90 weight% of an oxetane ring containing compound, 10 - 70 weight% of a compound having an oxyrane group, and 0 - 40 weight% of a vinyl ether compound, resulting in further enhancement of both the foregoing curability and ejecting stability.
Further, the inventors found that by employing an oxetane compound represented by foregoing Formula (E),

curability and also ejection stability were favorably enhanced. In cases when only an oxetane compound is employed, it is more preferable to use a monofunctional oxetane compound together with a multifunctional oxetane compound having at least two oxetane rings.

Hereinafter, the present invention is explained in detail.

Firstly, onium salts (photolytically acid generating agents) which generate no benzene by exposure to actinic radiation included in an ink according to the present invention is explained.

"Generate no benzene by exposure to actinic radiation", as described in the present invention, means that no substantial amount of benzene is generated, and specifically refers to the following case. A 15 μm thick image of an area of approximately 100 $m^2$ is printed employing an ink containing onium salts (being photolytically acid generating agents) in an amount of 5 percent by weight in the ink composition, and the resulting ink layer, maintained at 30 °C, is exposed to actinic radiation in an amount which completely decomposes the photolytically acid generating agents and the amount of generated benzene was determined. In such a test, "generate no benzene by exposure to actinic radiation" means that no benzene was generated, or the amount of generated benzene was negligible, being at most 5 μg. Preferred as the aforesaid onium slats are sulfonium salts or iodonium salts. Those having a substituent on the benzene ring, which bonds to $S^+$ or $I^+$, satisfy the above conditions.

Preferred as the aforesaid sulfonium salts are sulfonium salt compounds represented by General Formulas (1) - (4), and those having a substituent on the benzene ring, which bonds to $S^+$, satisfy the above conditions.

In above General Formulas (1) - (4), $R_1$ - $R_{17}$ each represent a hydrogen atom or a substituent. None of $R_1$ - $R_3$ simultaneously represent a hydrogen atom, none of $R_4$ - $R_7$ simultaneously represent a hydrogen atom, and none of $R_{12}$ - $R_{17}$ simultaneously represent a hydrogen atom.

Preferably listed as substituents represented by $R_1$ - $R_{17}$ may be an alkyl group such as a methyl group, an ethyl group, a propyl group, an isopropyl group, a butyl group, an isobutyl group, a t-butyl group, a pentyl group, or an hexyl group; an alkoxy group such as a methoxy group, an ethoxy group, a propoxy group, a butoxy group, a hexyloxy group, a decyloxy group, or a dodecyloxy group; a carbonyl group such as an acetoxy group, a propionyloxy group, a decylcarbonyloxy group, a dodecylcarbonyloxy group, a methoxycarbonyl group, an ethoxycarbonyl group, or a benzoyloxy group; a phenylthio group; a halogen atom such as fluorine, chlorine, bromine, or iodine; a cyano group; a nitro group; and a hydroxyl group.

X represents a non-nucleophilic anionic residual group. Listed as examples of such may be a halogen atom such as F, Cl, Br, and I, $B(C_6F_5)$, $R_{18}COO$, $R_{19}SO_3$, $SbF_6$, $AsF_6$, $PF_6$, or $BF_4$, wherein $R_{18}$ and $R_{19}$ each represent an alkyl group such as a methyl group, an ethyl group, a propyl group, or a butyl group, a halogen atom such as fluorine, chlorine, bromine, or iodine, a nitro group, a cyano group, an alkyl group which may be substituted with an alkoxy group such as a methoxy group or an ethoxy group, or a phenyl group. Of these, in view of safety, $B(C_6F_5)_4$ and $PF_6$ are preferred.

It is possible to readily synthesize the aforesaid compounds employing methods known in the art in the same manner as for photolytically acid generating agents, described in THE CHEMICAL SOCIETY OF JAPAN, Vol. 71 No. 11, 1998, and "Imezingu yo Yuuki Zairyo (Organic Materials for Imaging)", edited by Yuuki Electronics Zairyo Kenkyu Kai, published by Bunshin Shuppan (1993).

In the present invention, it is particularly preferable that the sulfonium salt represented by aforesaid General Formulas (1) - (4) is at least one of the sulfonium salts selected from General Formulas (5) - (13), described below. X represents a non-nucleophilic anionic residual group in the same manner as above.

As an exemplification compound including an iodonium salt, the following compounds may be listed ups other than that X in the above-mentioned formulas [5]- [13] is $PF_6$.

Exemplified composition **S-1**

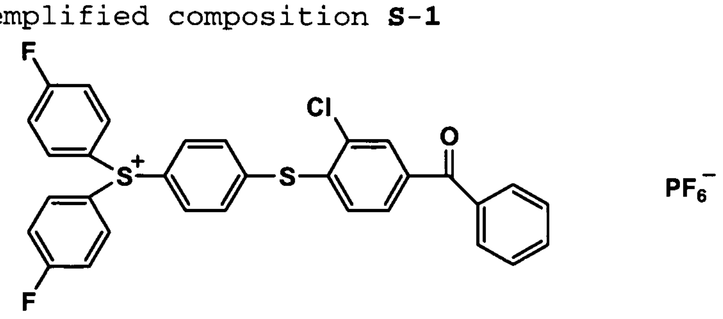

Exemplified composition **S-2**

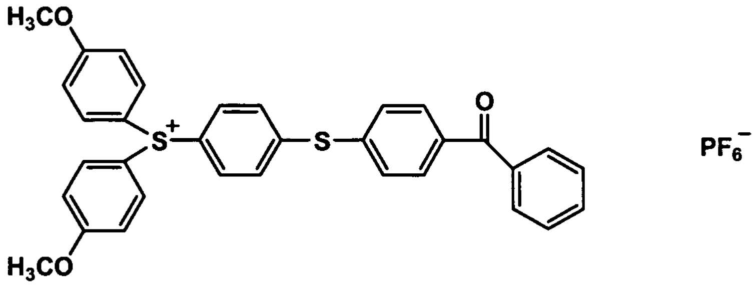

Exemplified composition **S-3**

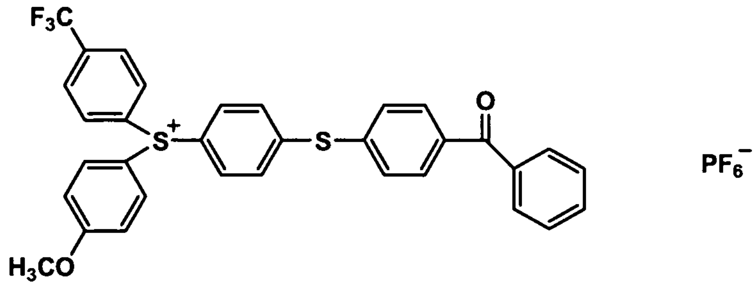

Exemplified composition **S-4**

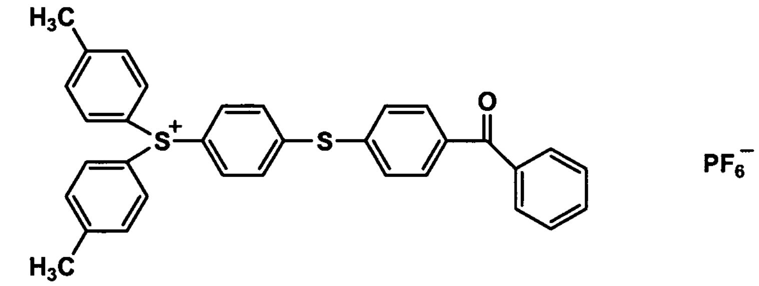

Exemplified composition **S-5**

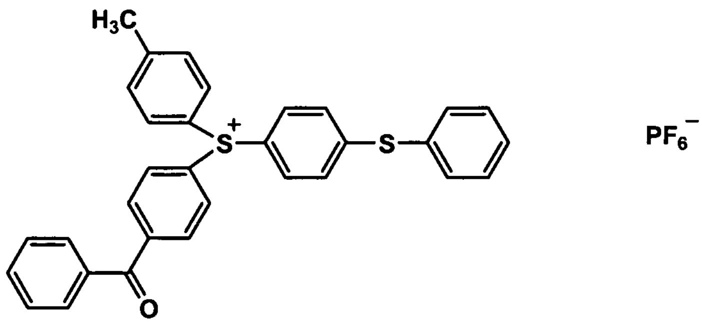

Exemplified composition **S-6**

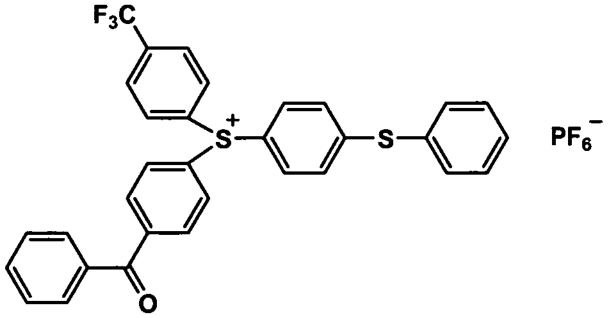

Exemplified composition **S-7**

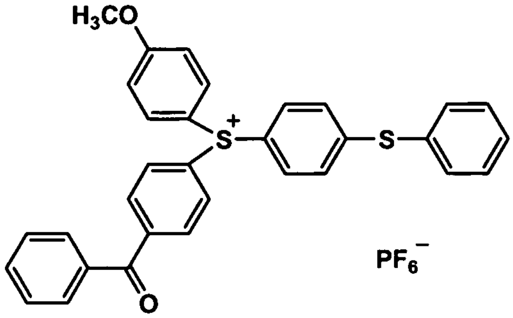

Exemplified composition **S-8**

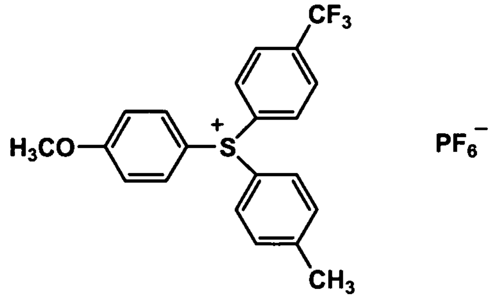

Exemplified composition **S-9**

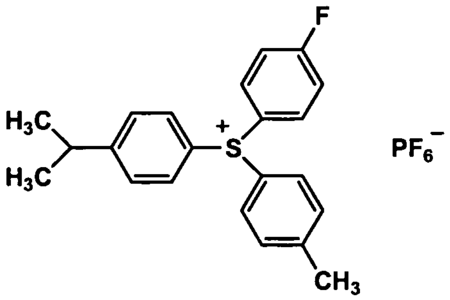

Exemplified composition **S-10**

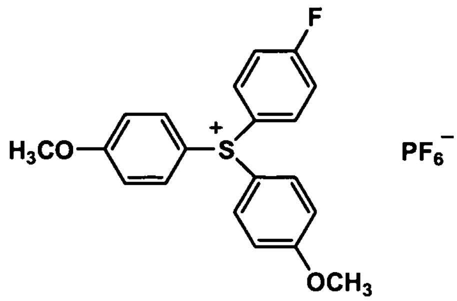

Exemplified composition **I-1**

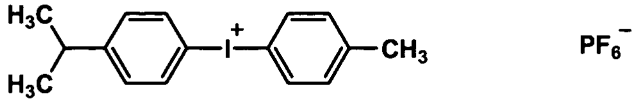

Exemplified composition **I-2**

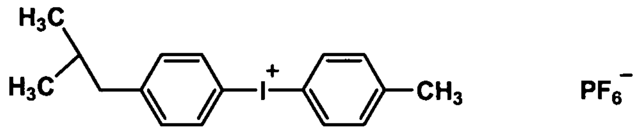

Exemplified composition **I-3**

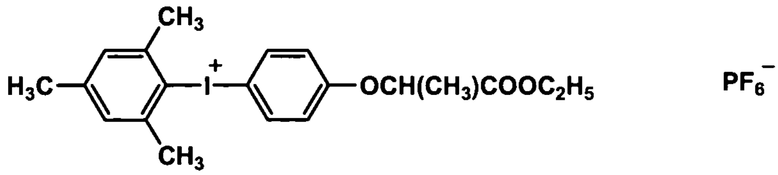

Exemplified composition **I-4**

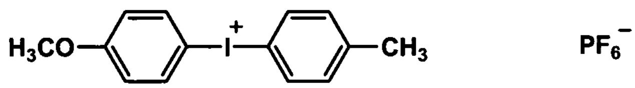

Exemplified composition **I-5**

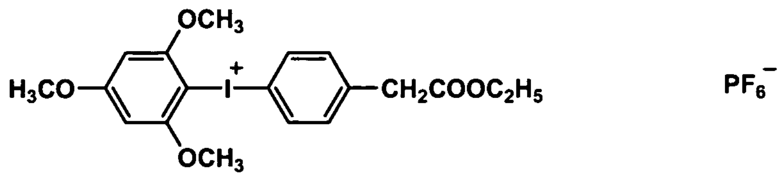

According to the method for storing the actinic radiation curable inkjet ink in the present invention, the percentage of water contained in the actinic radiation curable inkjet ink as measured by the Karl Fischer method is within the range from 1.50 through 5.00 percent by mass.

The percentage of water contained therein by the Karl Fischer method was measured in conformity to JIS K 0068. The apparatus that can be used for measurement by the Karl Fischer method is exemplified by Automatic water content measuring apparatus AQV-2000 manufactured by Hiranuma Sangyo Co., Ltd.

In the storage method of the present invention, there is no restriction to the method for reaching the level within the range of water content stipulated in the present invention. For example, ink can be sealed in a container at 20 °C with a relative humidity of 80% RH, without the present invention being restricted thereto. If the water content in the ink is less than 1.50 percent by mass, the variation in ink viscosity will be increased by storage, and emission from the recording head will be instable. Especially when the amount of ink particles to be emitted is small, the adverse effect will be serious. Further, if the percentage of water contained in ink has exceeded 5.00 percent by mass, ink curability seriously deteriorates. The deterioration is especially serious when the ink is to be cured immediately after arrival of ink to the recording material for the purpose of improving the image quality. Use of the actinic radiation curable inkjet ink containing the cationic polymerizable monomer and initiator stored within the aforementioned percentage of water contained in ink ensures formation of a stable high-definition image, without being affected by the ink storage environment (temperature and humidity) and printing environment (temperature and humidity). If the ink supply system from the ink container to the recording head is made into a closed system, the advantages of the present invention will be improved. Further, if the oxetane compound is contained as a cationic polymerizable monomer, the percentage of water contained in ink can be effectively controlled at the time of ink storage. The advantages of the present invention will be more

improved if used in combination with the compound including the oxetane compound and oxirane group.

In the storage method of the actinic radiation curable type ink-jet ink, when the actinic radiation curable type ink-jet ink is filled in a preserving container and preserved, it is preferable that the following formula (1) is satisfied, wherein WR is the moisture content (in percent) of the aforesaid actinic radiation curable ink-jet ink; SR is the ratio (the void ratio) of the vacant space volume which is obtained by deducting the volume occupied by the actinic radiation curable ink from the interior volume of the aforesaid storage container to the interior volume of said storage container; and WP is the water vapor pressure (Pa) in the aforesaid vacant space.

Formula (1)

$$WP \times WR/SR > 6.65$$

In the case in which the value of WP x WR/SR is less than 6.65, curability markedly varies depending on the ambient conditions during curing of ink ejected onto the substrate through exposure. The upper limit of this value is 665. The value which exceeds this is not preferred because the energy of the necessary actinic radiation for curing becomes excessively large. The value is more preferably, WP x WR/SR > 13.3.

In the present invention, in a container which is filled with the actinic radiation curable type ink and used for its storage, employed as methods for controlling the water vapor pressure in the empty portion may be the following methods described in JIS, namely which include the 2-point pressure method (JIS-B-7920-4.3 (1)), the 2-point temperature method (JIS-B-7920-4.3 (2)), the mixed method of the above 2-Point pressure method and 2-Point temperature method (JIS-B-7920-4.3 (3)), the flow dividing method (JIS-B-7920-4.3 (4)), and the saturated salt method (JIS-B-7920-4.3 (5)). Containers according to the present invention, which are filled with an actinic radiation curable type ink-jet ink and used for its storage, refer to ink bottles employed for delivery from manufacturers to customers, main ink-feeding tanks arranged in ink-jet apparatuses, and ink sub-tanks which are arranged in the a liquid conveying system from the ink tank to the head. When ink storage is conducted in any of these storage containers beyond the conditions specified in the present invention, the storage stability of ink may be degraded, gelling may occur in the ink tank, and the liquid conveying pipe may be clogged.

In this invention, to further enhance ejection stability, basic compounds are preferably combined. When the foregoing iodonium salt is employed as a photo acid generator, it is especially effective.

As a basic compound, any well-known appropriate compound may be used, but typical examples include a basic alkali metal compound, a basic alkaline earth metal compound, and basic organic compounds such as amines.

As basic alkali metal compounds, listed are a hydroxide of alkali metals (such as lithium hydroxide, sodium hydroxide and potassium hydroxide), a carbonate of alkali metals (such as lithium carbonate, sodium carbonate and potassium carbonate), and an alcholate of alkali metals (such as sodium methoxide, sodium ethoxide, potassium methoxide and potassium ethoxide).

As basic alkaline earth metal compounds, listed are a hydroxide of alkaline earth metals (such as magnesium hydroxide and calcium hydroxide), a carbonate of an alkaline earth metal (such as magnesium carbonate and calcium carbonate), and an alcholate of an alkaline earth metal (such as magnesium methoxide).

As basic organic compounds, listed are nitrogen containing heterocyclic compounds such as an amine, a quinoline and a quinolizine. Of these, amine is preferable from the viewpoint of compatibility with a photo polymerizable monomer, for example, octylamine, naphthylamine, xylenediamine, dibenzylamine, diphenylamine, dibutylamine, trioctylamine, tetramethylethylenediamine, tetramethyl-1,6-hexamethylenediamine, hexamethylenetetramine, and triethanolamine.

The concentration, when a basic compound exists, is preferably 10 - 1,000 ppm compared to the total weight of the photo polymerizable monomer, and specifically preferable in the range of 20 - 500 ppm. These photo polymerizable compounds may be used alone or in combinations of a plurality of them.

In this invention, to enhance further ejection stability, a nonionic surface active agent is preferably used in combination.

As a nonionic surface active agent usable in this invention, there is no specific limitation, and exemplified is such as a polyoxyethylene - polyoxypropilene condensate, a polyoxyethylene laury ether, a secondary alcohol ethoxylate, a primary alcohol ethoxylate, a nonylphenol ethoxylate, an octylphenol ethoxylate, an oleyl alcohol ethoxylate, a lauryl alcohol ethoxylate, polyethylene glycol, polyoxyethylene glycol oleate, a sorbitan stearyl ester, a sorbitan oleyl ester, a polyoxyethylene sorbitan oleyl ester, a 2-hydroxyethyl methacrylate, a 4-hydroxybutyl acrylate, or an acrylic resin copolymerized of hydroxyl group containing unsaturated monomers such as a polyethylene glycol monomethyl ether.

Further, as samples, listed are alcohols such as isopropyl alcohol, n-butyl alcohol, propylene glycol monomethyl ether, and propylene glycol mono-butyl ether, or glycol ethers. Nonionic surface active agents may be used alone or a

mixture of more than two kinds.

In this invention, a specifically preferable nonionic surface active agent is a fluorochemical surface active agent which has a perflioroalkyl group in the molecule. Examples of a fluorochemical surface active agent which has a perfluoroalkyl group in the molecule usable in this invention include a perfluoroalkyl ethylene oxide addition product, a perfluoroalkylamine oxide, and a perfluoroalkyl containing oligomer, and specifically, for example, SURFLON S-141, SURFLON S-145, SURFLON S-381, SURFLON S-383, SURFLOM S-393, SURFLON SC-101, SURFLON SC-105, SURFLON KH-40 ans SURFLON SA-100 (all being products of SEIMI CHEMICAL Co., Ltd.), and MEGAFACE F-171, MEGAFACE F-172, MEGAFACE F-173, MEGAFACE F-177, MEGAFACE F-178A, MEGAFACE F-178, MEGAFACE F-183, MEGAFACE F-184, MEGAFACE F-815, MEGAFACE F-470, and MEGAFACE F-471 (all being products of DAINIPPON INK AND CHEMICALS, INCORPORATED). [reference literature; Chemical Products 13,700, pp. 1,239 - 1,242, The Chemical Daily, Co., Ltd. (2000)]. In the ink of this invention, the fluorochemical surface active agents which have a perfluoroalkyl group in the molecule may be used alone or in combinations more than two kinds.

In the ink of this invention, the desired characteristic is to contain a compound having an oxetane ring as a photo polymerizable compound.

The oxetane compounds usable in the present invention refer to compounds having an oxetane ring. It is possible to employ any appropriate oxetane compound known in the art, such as those introduced in JP-A Nos. 2001-220526 and 2001-310937.

Further, in this invention, from the viewpoint of enhancement of better curability and ejection stability, it is preferable to contain a compound having at least one oxilane group.

Various forms of cation polymerizable monomer known in the prior art can be used as a photo-polymerizable compound. For example, it is possible to utilize the epoxy compound, vinyl ether compound and oxetane group disclosed in Japanese Patent Tokkaihei 6-9714, Japanese Patent Tokkai 2001-31892, Japanese Patent Tokkai 2001-40068, Japanese Patent Tokkai 2001-55507, Japanese Patent Tokkai 2001-310938, Japanese Patent Tokkai 2001-310937, and Japanese Patent Tokkai 2001-220526.

The epoxy compound includes the aromatic epoxide, alicyclic epoxide, and aliphatic epoxy introduced below:

Preferred aromatic epoxide is exemplified by di- or poly-glycidyl ether produced by reaction between polyvalent phenol having at least one aromatic nucleus or the alkylene oxide adduct thereof and epichlorhydrin. For example, it includes di- or poly-glycidyl ether of bisphenol A or alkylene oxide adduct thereof, hydrogenated bisphenol A or alkylene oxide adduct thereof, and novolak type epoxy resin.

Alkylen oxide includes ethylene oxide, propylene oxide, etc.

The preferred alicyclic epoxide is the compound containing the cyclohexane oxide or cyclopentene oxide obtained by epoxidization of the compound containing at least one cycloalkane ring such as cyclohexane or cyclopentene ring, using hydrogen peroxide and peroxy acid.

The preferred aliphatic epoxide includes di- or poly-glycidyl ether of aliphatic polyvalent alcohol or alkylene oxide adduct. It is represented by:

diglycidyl ether of alkylene glycol such as diglycidyl ether of ethylene glycol, diglycidyl ether of propylene glycol or diglycidyl ether of 1,6-hexanediol;
polyglycidyl ether of polyvalent alcohol such as di- or tri-glycidyl ether of glycerine or alkylene oxide adduct;
diglycidyl ether of polyethylene glycol or alkylene oxide adduct thereof; and
diglycidyl ether of polyalkylene glycol such as diglycidyl ether of polypropylene glycol or alkylene oxide adduct thereof. In this case, the examples of alkylene oxide are ethylene oxide and propylene oxide.

Of the aforementioned epoxide, aromatic epoxide and alicyclic epoxide are preferred when consideration is given to quick curing performance. Especially the alicyclic epoxide is preferably utilized. In the present invention, one of the aforementioned epoxides can be used independently, or two or more can be used in combination as appropriate.

In the present invention, from the viewpoint of ensuring safety such as AMES and sensitizing performances, an epoxide compound containing an oxirane group is preferably either the epoxidized fatty acid ester or deoxidized fatty acid glyceride.

The epoxidized fatty acid ester and epoxidized fatty acid glyceride are subjected to any restriction if they are produced by introducing an epoxy group into the fatty oil ester and fatty oil glyceride. The epoxidized fatty acid ester is produced by epoxidizing the oleic acid ester, and epoxy methyl stearate, epoxy butyl stearate and epoxy octyl stearate are employed as epoxidized fatty acid ester. Similarly, the epoxidized fatty acid glyceride is produced by epoxidizing the soybean oil, linseed oil and castor oil. Epoxidized soybean oil, epoxidized linseed oil and epoxidized castor oil are used as the epoxidized fatty acid glyceride.

In the present invention, for further improvement of the curing performance and ink emission stability, 30 through 95 percent by mass of compound containing an oxetane ring, 5 through 70 percent by mass of compound containing an oxirane ring and 0 through 40 percent by mass of vinyl ether compound are preferably contained in the photo-polymerizable compound.

The oxetane compound known in the prior art, as disclosed in the Japanese Patents Tokkai 2001-220526 and 2001-310937 can be used as the oxetane compound that can be used in the present invention.

Examples of the vinyl ether compound that can be used in the present invention include:

di- or tri-vinylether compounds such as ethyleneglycol divinylether, diethylene glycol divinylether, triethylene glycol divinylether, propylene glycol divinylether, dipropylene glycol divinylether, butane diol vinylether, hexane diol divinylether, cyclohexane dimethanol divinylether and trimethyrol propane trivinylether; and
monovinylether compounds such as ethyl vinylether, n-butylvinylether, isobutylvinylether, octadesylvinylether, cyclohexylvinylether, hydroxybutylvinylether, 2-ethylhexylvinylether, cyclohexane dimethanol monovinylether, n-propylvinylether, isopropyl vinylether, isopropenyl ether-O-propylene carbonate, dodesylvinylether, diethylene glycol monovinylether and octadesyl vinylether.

Of these vinylether compounds, the di- or tri-vinylether compound or divinylether compound in particular is preferred when consideration is given to curing performance, degree of adhesion and surface hardness. In the present invention, one of the aforementioned vinylether compound can be used independently, or two or more can be used in combination as appropriate.

In the present invention, 60 through 95 percent by mass of the compound including an oxetane ring, 5 through 40 percent by mass of the compound including an oxirane group, and 0 through 40 percent by mass of the vinyl ether compound are preferably included as a photo-polymerizable compound. This arrangement improves both the curability and emission stability.

In the present invention, a compound including an oxetane ring that can be expressed by the aforementioned general formula (E) is preferably used for further improvement of the curability and emission stability.

The following describes the compound including the oxetane ring that can be expressed by the aforementioned general formula (E) of the present invention.

In the general formula (E), $R_1$ through $R_6$ represent hydrogen atom or substituent, wherein $R_3$ through $R_6$ do not represent a hydrogen atom at the same time.

The compound containing one oxetane ring in the molecule is exemplified by the compound that is expressed by the following general formulas (2) through (5).

[Chemical formula 7]

General formula (2)

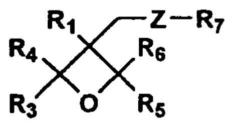

General formula (3)

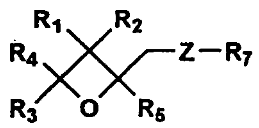

General formula (4)

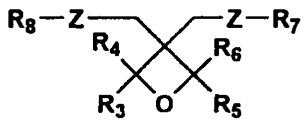

General formula (5)

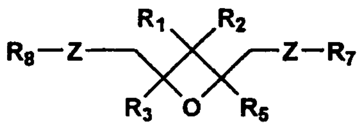

In the aforementioned general formulas (2) through (5), Z's are independently of each other, and each represents an oxygen or sulfur atom, or a divalent hydrocarbon group that may include oxygen or sulfur atom in the principal chain. $R_1$ through $R_6$ represent an alkyl group of 1 through 6 carbon atoms such as hydrogen atom, fluorine atom, methyl group, ethyl group, propyl group or butyl group; and a fluoro alkyl group of 1 through 6 carbon atoms, allyl group, aryl group, furyl group or thienyl group. $R_7$ and $R_8$ represent an alkyl group of 1 through 6 carbon atoms such as methyl group, ethyl group, propyl group or butyl group; alkenyl group of 1 through 6 carbon atoms such as 1-propenyl group, 2-propenyl group, 2-methyl-1-propenyl group, 2-methyl-2-propenyl group, 1-butenyl group, 2-butenyl group or 3-butenyl group; an aryl group such as phenyl group, benzyl group, fluorobenzyl group, methoxybenzyl group or phenoxy ethyl group; alkyl carbonyl group of 1 through 6 carbon atoms such as propyl carbonyl group, butyl carbonyl group or pentyl carbonyl group; alkoxy carbonyl group of 1 through 6 carbon atoms such as ethoxy carbonyl group, propoxy carbonyl group or butoxy carbonyl group; and an alkoxy carbamoyl group of 1 through 6 carbon atoms such as ethoxy carbamoyl group, propyl carbamoyl group or butyl pentyl carbamoyl group.

In the aforementioned general formulas (2) through (5), the compound containing the oxetane ring used in the present invention is preferred to be such that $R_1$ is a lower alkyl group, especially ethyl group; $R_7$ and $R_8$ are a propyl group, butyl group, phenyl group or benzyl group; and Z is a hydrocarbon group not including an oxygen or sulfur atom. $R_3$ through $R_6$ do not represent a hydrogen atom at the same time.

The compound having two or more oxetane rings in the molecule is exemplified by the compound represented by the following general formulas (6), (7) and (13).

[Chemical formula 8]

General formula (6)

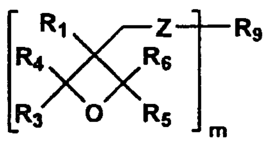

General formula (7)

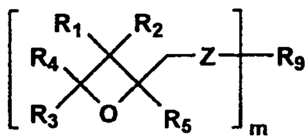

In the aforementioned general formulas (6) and (7), m is 2, 3 or 4; Z's are independently of each other, each representing an oxygen or sulfur atom, or a divalent hydrocarbon group that may include oxygen or sulfur atom. $R_1$ represents an alkyl group or phenyl group of 1 through 6 carbon atoms such as a hydrogen atom, fluorine atom, methyl group, ethyl group, propyl group or butyl group, or a fluoro alkyl group, allyl group, aryl group or furyl group of 1 through 6 carbon atoms. $R_9$ denotes the linear or branched alkylene group or linear or branched poly(alkyleneoxy) group of 1 through 12 carbon atoms expressed by the following general formula (8), for example.

[Chemical 9]

General formula (8)

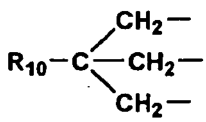

(In the general formula (8), $R_{10}$ represents a lower alkyl group such as a methyl group, ethyl group or propyl group, or a polyvalent group selected from groups expressed by the following general formulas (9), (10) and (11).

[Chemical formula 10]

General formula (9)

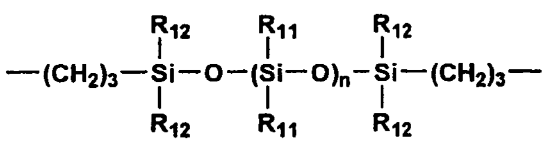

In the aforementioned general formula (9), n denotes an integer of 0 or 1 through 2000, and $R_{11}$ indicates an alkyl group of 1 through 10 carbon atoms such as methyl group, ethyl group, propyl group or butyl group, and a group selected from among the groups conforming to the following general formula (12).

[Chemical formula 11]

General formula (12)

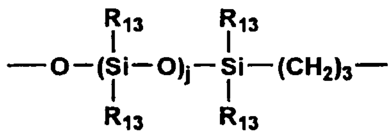

In the aforementioned general formula (12), "j" denotes an integer of 0 or 1 through 100, $R_{13}$ indicates an alkyl of 1 through 10 carbon atoms, and $R_{12}$ represents an alkyl group of 1 through 10 carbon atoms such as a methyl group, ethyl group, propyl group or butyl group.

[Chemical formula 12]

General formula (10)

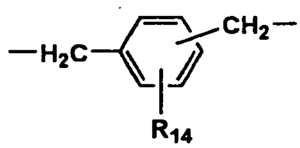

In the aforementioned general formula (10), $R_{14}$ denotes an alkyl group of 1 through 10 carbon atoms such as a hydrogen atom, methyl group, ethyl group, propyl group or butyl group. Alternatively, $R_{14}$ indicates an alkoxy group, halogen atom, nitro group, cyano group, mercapto group, lower alkyl carboxylate group or carboxyl group of 1 through 10 carbon atoms.

[Chemical formula 13]

General formula (11)

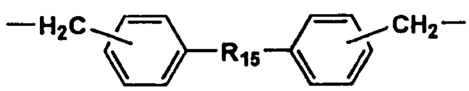

In the aforementioned general formula (11), $R_{15}$ is an oxygen atom, sulfur atom, NH, SO, $SO_2$, $CH_2$, $C(CH_3)_2$ or $C(CF_3)_2$.

The compound containing the oxetane ring used in the present invention is preferred to be such that, in the aforementioned general formulas (6) and (7), $R_1$ represents a lower alkyl group, especially ethyl group; $R_9$ is a group and hexamethylene group wherein, in the general formula (10), $R_{14}$ indicates a hydrogen atom; $R_{10}$ shows an ethyl group, in the general formula (8); $R_{12}$ and $R_{13}$ denote a methyl group in the general formula (9) and (12); and Z is a hydrocarbon group not including an oxygen or sulfur atom. $R_3$ through $R_6$ do not represent a hydrogen atom at the same time.

[Chemical formula 14]

General formula (13)

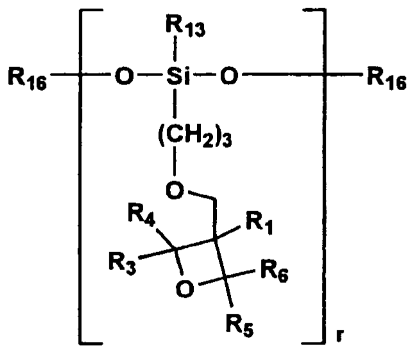

In the general formula (13), r is an integer of 25 through 200, and $R_{13}$ is defined in the same manner as $R_{13}$ in the aforementioned general formula (12). $R_{16}$ is an alkyl group or trialkylsilyl group of 1 through 4 carbon atoms. $R_4$ through $R_6$ do not represent a hydrogen atom at the same time.

The following describes the specific example of the compounds expressed by the general formula (E), without the present invention being restricted thereto:

In the ink of the present invention, a combined use of an uni-functional oxetane compound containing only one oxetane ring and multi-functional oxetane compound containing two or more oxetane rings is preferred to improve the film strength and the contact with the recording material subsequent to curing. However, use of a compound having five or more oxetane rings will increase the viscosity of the ink composition. This will cause handling difficulties. This will also raise the glass transfer temperature of the ink composition, with the result that the viscosity of the cured object having been obtained will be insufficient. The compound having an oxetane ring used in the present invention is preferred to include 1 through 4 oxetane rings.

Exemplified compounds represented by Formula (E) are described below, but the present invention is not limited to these examples.

E-1

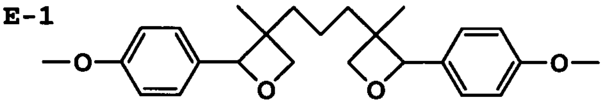

E-2

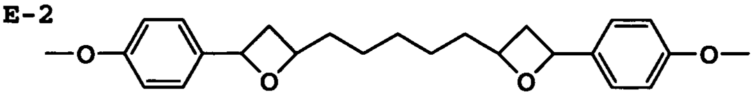

E-3

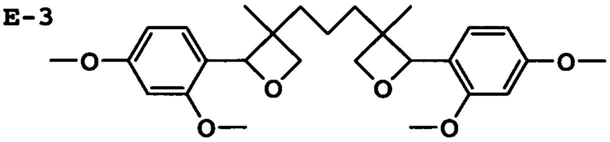

E-4

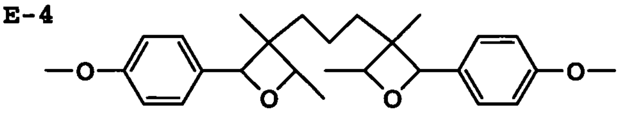

E-5

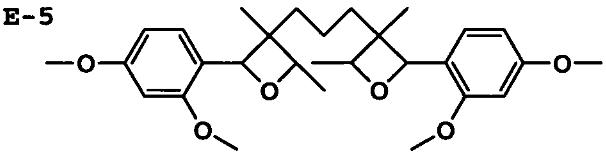

E-6

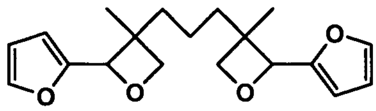

E-7

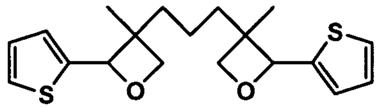

E-8

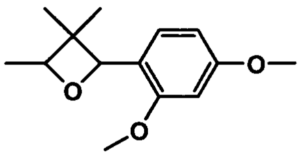

E-9

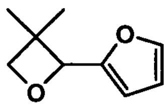

E-10

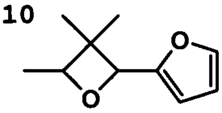

E-11

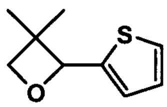

E-12

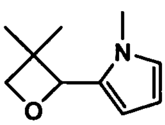

E-13

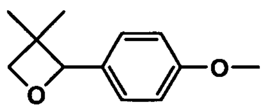

E-14

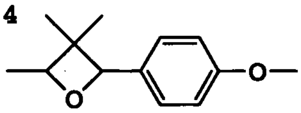

These compounds can be easily synthesized employing the methods described in "Kobunshikagaku to Yukikagaku tono Cacchiboru (Catch Ball Between Polymer Science and Organic Chemistry)", the 4th session, or referring to the following documents.

1) Hu Xianming, Richard M. Kellogg, Synthesis, pp. 535 - 538, May 2) A. O. Fitton, J. Hill, D. Ejane, R. Miller, Synth., vol. 12, pg. 1140 3) Toshiro Imai and Shinya Nishida, Can. J. Chem., Vol. 59, pp. 2503 - 2509 (1981)

4) Nobujiro Shimizu, Shintaro Yamaoka, and Yuho Tsuno, Bull. Chem. Soc. Jpn., vol. 56, pp. 3853 - 3854 5) Walter Fisher and Cyril A. Grob, Helv. Chim. Acta., vol. 61, pp. 2336 6) Chem., Ber., vol. 101, pg. 1850 7) "Heterocyclic Compounds with Three- and Four-membered Rings", Part Two, Chapter IX, Interscience Publishers, John Wiley & Sons, New York 8) H. A. J. Curless, "Synthetic Organic Photochemistry", Plenum, New York 9) M. Braun, Nachr. Chem. Tech. Lab., vol. 33, pg. 213 10) S. H. Schroeter, J. Org. Chem., vol. 34, No. 5, pg. 1181 11) D. R. Arnold, Adv. Photochem., vol. 6, pg. 301

12) "Heterocyclic Compounds With Three -and- Four-membered Rings", Part Two, Chapter IX, Interscience Publisher, John Wiley & Sons, New York Further, in the ink of this invention, the combination of a monofunctional oxetane compound containing one oxetane ring, and a multifunctional oxetane compound containing more than two oxetane rings, is more preferable to enhance film hardness and adhesion to a recording material after curing. However, when using a compound incorporating more than five oxetane rings, viscosity of the ink composition becomes excessive, resulting in difficulty in handling, and further, glass-transition temperature of the ink composition becomes excessive, resulting in insufficient adhesion of the cured material. The oxetane ring incorporating compound usable in this invention is preferably a compound containing 1 - 4 oxetane rings.

The activated light curable inkjet ink of the present invention contains various forms of dyes and/or pigments known in the prior art, together with the aforementioned activated light curable type compositions. It preferably contains pigments.

The following shows the pigments preferably used in the present invention:

C.I. Pigment Yellow-1, 3, 12, 13, 14, 17, 81, 83, 87, 95, 109, 42 and 138
C.I. Pigment Orange-16, 36 and 38
C.I. Pigment Red-5, 22, 38, 48: 1, 48: 2, 48: 4, 49: 1, 53: 1, 57: 1, 63: 1, 144, 146, 185, 101
C.I. Pigment Violet-19, 23
C.I. Pigment Blue - 15: 1, 15: 3, 15: 4, 18, 60, 27, 29
C.I. Pigment Green-7, 36
C.I. Pigment White-6, 18, 21
C.I. Pigment Black-7

In the present invention, use of a white ink is preferred to improve the masking performance of the color on the transparent substrate like a plastic film. In particular, use of a white ink is preferred in soft package printing and label printing. However, since the amount of emission is increased, the amount of use is restricted automatically in order to ensure the aforementioned ink emission stability and to avoid curling or wrinkling of the recording medium.

A ball mill, sand mill, Atlighter, roll mill, agitator, Henschell mixer, colloid mill, ultrasonic homogenizer, purl mill, wet jet mill and paint shaker can be used for dispersion of the aforementioned pigments. A dispersant can be added at the time of dispersion of the aforementioned pigments. Use of a high molecular dispersant is preferred as a dispersant. Solsperse Series of Avecia Inc. A high molecular dispersant and PB series of Ajinomoto Finetechno Co., Ltd. can be mentioned as the high molecular dispersant. It is possible to use a synergist conforming to each pigment as a dispersant aid. 1 through 50 percent by mass of these dispersants and the aids thereof is preferably added with respect to 100 percent by mass. A solvent or polymerizable compound is used as the dispersant medium. In the exposure cure type ink used in the present invention, reaction and curing are carried out immediately after arrival of ink. So the dispersant medium is preferably of non-solvent type. If the solvent remains on the cured image, solvent resistance will deteriorate, and the VOC remaining solvent will cause a problem. Accordingly, the dispersant medium should be non-solvent. From the viewpoint of dispersion performance, use of a polymerizable compound -- particularly a monomer of the lowest viscosity -- is preferred.

For dispersion of the pigment, the average particle size of the pigment is preferably 0.08 through 0.5 μm. The pigment dispersant and dispersion medium are selected, and the dispersion conditions and filtering conditions are set in such a way that the maximum particle size will be 0.3 through 10 μm, preferably 0.3 through 3 μm. This particle size management minimizes the change of the head nozzle of being clogged, and ensures the ink storage stability, transparency and curing sensitivity. The amount of the ink of the present invention is preferably 1 through 10 percent by mass of the entire ink as a coloring material.

In addition to the aforementioned substances, a great variety of additives can be added to the activated light curable inkjet ink of the present invention. For example, it is possible to add a surface active agent, leveling additive, matting agent, polyester resin for adjustment of film physical properties, polyurethane resin, vinyl resin, acryl resin, rubber resin and waxes. To improve the storage stability, any of the basic compounds known in the prior art can be used. They are represented by a basic alkaline metal compound, basic alkaline earth metal compound, and basic organic compound such as amine. Further, the radical polymerizable monomer is combined with the initiator to produce a hybrid cure ink of radical cation.

In the ink of the present invention, the viscosity at 25 °C is preferably 7 through 50 mPa.s in order to ensure stable ink emission and excellent curability, independently of the curing environment (temperature and humidity).

The recording medium usable in the present invention includes varieties of non-absorbing plastics and films thereof used in so-called soft package, in addition to the normal uncoated paper and coated paper. The examples of varieties of plastic films are a PET film, OPS film, OPP film, ONy film, PVC film, PE film and TAC film. Other films are polycarbonate, acryl resin, ABS, polyacetal, PVA and rubbers. Metals and glasses can also be used. The arrangement of the present invention is effective when an image is formed especially on the substances shrinkable by heat, such as the PET film, OPS film, OPP film, ONy film, PVC film out of the aforementioned recording materials. When these substrates are used, curling and deformation of the film are likely to occur due to ink curing shrinkage or heat generated at the time of curing reaction. Not only that, ink film does not easily conform to the shrinkage of ink film.

The surface energy varies greatly according to each type of plastic films. The dot diameter after having been emitted may change, depending on the recording medium. This has been a problem in the prior art. In the arrangement of the present invention, an image of high definition can be formed on the recording medium having a surface energy of 35 through 60 mN/m over an extensive range from the OPP film and OPS film having a lower surface energy to the PET film having a higher surface energy.

In the present invention, use of a longer recording medium (web) is more advantageous from the viewpoint of the recording medium costs including the packaging cost and production cost, printing efficiency and compatibility with a wide variety of print sizes.

The following describes the image formation method of the present invention:

The image formation method preferred in the present invention is to jet the aforementioned ink onto a recording medium and to expose it according to the inkjet recording method, whereby activated light such as ultraviolet light is applied to cure the ink.

In the present invention, the thickness of the overall ink film is preferably 2 through 20 μm after the ink has been cured by application of activated light. For activated light curable inkjet recording in the field of screen printing, the overall ink thickness is greater than 20 μm. In the field of soft package printing where a thin plastic film is often used as the recording medium, there is a problem of the toughness and quality of the printed matter as a whole being changed, in addition to the aforementioned problem of curling and wrinkling of the recording medium. Thus, emission of ink resulting in excessive film thickness is not preferred.

The "overall ink film thickness" in the sense in which it is used here refers to the maximum value for the thickness of ink film exposed on a recording medium. The term "overall ink film thickness" has the same meaning, independently of whether inkjet recording is conducted in a single color mode, or in the two-, three- or four-color (white ink base) superimposition mode.

The recording head and ink is heated up to 35 through 100 °C, and ink is emitted. This is an ink emission condition preferred for the purpose of ensuring emission stability. The activated light curable inkjet ink is characterized by a wide range of fluctuation in viscosity resulting from temperature change, and the fluctuation in viscosity directly has a serious influence upon the ink particle size and ink particle jetting speed, thereby causing deterioration of image quality. This requires the ink temperature to be kept constant while being raised. The range of ink temperature control is ±5 °C, preferably ±2 °C, more preferably ±1 °C, with respect to the setting.

In the present invention, the amount of ink particle emitted from the nozzle is preferably 2 through 15 pl. To create a high definition image, the amount of ink particles should be within this range. If this amount of ink particle is emitted, a serious effect will be given to the aforementioned emission stability. Even if ink emission is carried out in a small amount of ink particles of 2 through 15 pl, the present invention ensures the emission stability to be improved and a stable high-definition image to be created.

In the image formation method of the present invention, activated light is preferably applied 0.001 through 2.0 sec., more preferably 0.001 through 1.0 sec., after arrival of ink after arrival of ink. To form a high-definition image, it is particularly important that light should be applied as early as possible.

One of the methods of applying activated light is disclosed in the Japanese Patent Tokkaisho 60-132767. According to this technique, a light source is arranged on each side of the heat unit, and the head and light sources can be scanned by a shuttle method. Light is applied some time after arrival of ink. Further, curing is conducted by another light source that is not driven. U.S. Pat. No. 6,145,979 discloses the method of applying light, wherein a optical fiber is utilized. It also discloses the method of applying a collimated light source to a mirror surface arranged on the side of the head unit, whereby ultraviolet rays are applied to a recording section. In the image formation method of the present invention, these methods can be utilized.

Activated light is applied in two steps: 0.001 through 2.0 after arrival of the ink, activated light is applied according to the aforementioned method. Upon completion of the entire printing procedure, activated light is again applied. This is one of the preferred methods. Application of activated light in two separate steps more effectively reduces the possibility of shrinkage of the recording medium that may occur when ink is cured.

In the UV inkjet method according to the prior art, in order to minimize the expansion of dots and bleeding

subsequent to arrival of ink, the light source of high illumination is normally used wherein the overall power consumption of the light source exceeds 1 kW•hr. However, use of such a light source has caused excessive shrinkage of a recording medium in printing on a shrink label or the like, and such a light source cannot be used in practice, according to the prior art.

By contrast, in the present invention, the activated light with the maximum illumination is preferably used in the wavelength range of 254 nm. The present invention allows a high-definition image to be created even if the light source having an overall power consumption of 1 kW•hr or more is used. Further, the shrinkage of a recording medium is kept within practically permissible level.

In the present invention, the overall power consumption of the light source is preferably less than 1 kW•hr. Examples of the power consumption being less than 1 kW•hr. include a fluorescent tube, cold-cathode tube and LED, without the prevent invention being restricted thereto.

The following describes the inkjet recording apparatus in the present invention (hereinafter referred to as "recording apparatus" for short).

Te recording apparatus of the present invention will be described with reference to drawings whenever required. The recording apparatus in the drawing represents only one embodiment of the present invention, without the recording apparatus invention being restricted thereto.

Fig. 1 is a front view showing the structure of the major portions of an recording apparatus of the present invention. The recording apparatus 1 comprises a head carriage 2, a recording head 3, an irradiation means 4 and a platen section 5. In the recording apparatus 1, a platen section 5 is arranged below the recording medium P. Having a function of absorbing the ultraviolet rays, the platen section 5 absorbs the excess ultraviolet rays having passed through the recording medium P, with the result that very stable reproduction of a high-definition image can be achieved.

The recording medium P is guided by the guide member 6, and is fed from the foreground to the background in Fig. 1 by the operation of the conveyance means (not illustrated). A head scanning means (not illustrated) caused reciprocating motion of the head carriage 2 in the Y direction in Fig. 1, whereby scanning of the recording head 3 held by the head carriage 2 is carried out.

The head carriage 2 is arranged above the recording medium P and accommodates a plurality of recording heads 3 (to be described later) arranged in response to the number of colors used for image printing on the recording medium P, wherein the recording heads 3 are placed with its ink outlet facing downward. The head carriage 2 is installed on the recording apparatus 1 proper so that it can freely reciprocate in the Y direction of Fig. 1. Driven by the head scanning means, the head carriage 2 performs a reciprocating motion in the Y direction of Fig. 1.

In Fig. 1, the head carriage 2 accommodates recording heads 3 for white (W), yellow (Y), magenta (M), cyan (C) and black (K), light yellow (Ly), light magenta (Lm), light cyan (Lc), light black (Lk) and white (W), whereby an image is formed. In practice, the number of the recording heads 3 accommodated in the head carriage 2 can be determined as appropriate.

In the recording head 3, the activated light curable inkjet ink (e.g., ultraviolet cure ink) supplied by an ink supply means (not illustrated) is emitted toward the recording medium P through the ink outlet by the operation of a plurality of ink emission means arranged inside. The ultraviolet cure ink emitted by the recording head 3 comprises a coloring material, a polymerizable monomer, an initiator and others. The initiator works as a catalyst when the ink is exposed to ultraviolet rays. This allows the ink to be cured by resultant cross-linking and polymerization of the monomer.

The recording head 3 emits the ultraviolet cure ink in the form of ink particles to a predetermined area (area where ink can reach) in the recording medium P during the scanning operation wherein the movement from one end of the recording medium P to the other end of the recording medium P in the Y direction of Fig. 1 is performed by the drive of a head scanning means. Thus the ink particles are emitted to the area where ink can reach.

The aforementioned scanning operations are performed several times, and the ultraviolet cure ink is emitted to the area that can be reached by ink in one area. After that, the recording medium P is moved as in Fig. 1. While the scanning is again performed by the head scanning means, the ultraviolet cure ink is emitted by the recording head 3 to the next adjacent reachable area in the background in Fig. 1, with respect to the aforementioned area that can be reached by ink.

The aforementioned operation is repeated, and the ultraviolet cure ink is emitted from the recording head 3 synchronously with the head scanning means and conveyance means, whereby an image composed of a collection of ultraviolet cure ink particles is formed on the recording medium P.

The irradiation means 4 comprises an ultraviolet ray lamp for emitting ultraviolet rays of a specific wavelength range with a stable exposure energy, and a filter for transmitting the ultraviolet rays of a specific wavelength. The aforementioned ultraviolet ray lamp that can be used includes a mercury lamp, metal halide lamp, excimer laser, ultraviolet ray laser, cold-cathode tube, black light, and LED (light emitting diode). The band-shaped metal halide lamp, cold-cathode tube, mercury lamp, or black light is preferably utilized. The low-voltage mercury lamp cold cathode tube, hot cathode tube and bactericidal lamp for emitting ultraviolet rays having a wavelength of 254 nm are effective in preventing bleeding and controlling the dot diameter, and are preferably used. If the black light is used as a radiation source of the irradiation means 4, the irradiation means 4 for curing the ultraviolet cure ink can be produced economically.

In the ink-reachable area where the recording head 3 emits ultraviolet cure ink by one scanning operation through the drive of the head scanning means, the irradiation means 4 has the same configuration as the maximum one that can be set by the recording apparatus 1 (UV inkjet printer), or a configuration greater than the area that can be reached by ink.

The irradiation means 4 is fixed approximately parallel to the recording medium P on both sides of the head carriage 2.

To adjust the illumination of the ink outlet as described above, it is effective to protect the entire recording head 3 against light. It is also effective to ensure that the distance h2 from the ink outlet 31 to recording medium P is smaller than the distance h1 from the irradiation means 4 to recording medium P (h1 > h2), and to increase the distance d from the recording head 3 to the irradiation means 4. It is more preferred that a bellows structure 7 should be formed between the recording head 3 and irradiation means 4.

The wavelength of the ultraviolet rays applied by the irradiation means 4 can be adequately adjusted by replacing the ultraviolet ray lamp or filter arranged on the irradiation means 4.

The ink of the present invention is characterized by excellent ink emission stability. It is particularly effective when a line head type recording apparatus is used for image formation.

Fig. 2 is a top view of another example of the structure of the major portions of an inkjet recording apparatus.

The inkjet recording apparatus shown in Fig. 2 is called a line head system. The head carriage 2 is fixedly provided with a plurality of recording heads 3 of various colors so as to cover the overall width of the recording medium P.

The irradiation means 4 is arranged on the downstream side of the head carriage 2 so as to cover the overall width of the recording medium P, in the similar manner.

In the aforementioned lien head system, the head carriage 2 and irradiation means 4 are fixed in position. Only the recording medium P is conveyed, and ink is emitted and cured, whereby an image is formed.

[Examples]

The following describes the present invention specifically with reference to Examples, without the present invention being restricted thereto.

Example 1

«Preparation of ink composition set»

According to the following method, the ink composition sets 1 through 4 made up of the compositions listed in Tables 1 through 4 were prepared.

The ink composition sets 1 through 4 were prepared by taking the steps of: placing 3 parts by mass of dispersant (PB 822 by Ajinomoto Finetechno Inc.) and each photo-polymerizable compound listed in Tables 1 through 4 into a stainless steel beaker; dissolving the mixture by stirring and mixing for one hour while heating on a hot plate of 65 °C; adding into this solution the coloring materials listed in Tables 1 through 4; putting the solution into a plastic bottle together with 200 g of zirconia beads having a diameter of 1 mm; sealing it therein; applying a process of dispersion for 2 hours by a paint shaker; removing the zirconia beads thereafter; adding various additives such as photooxy-generating agent, acid proliferation agent and surface active agent at the ratio listed in Tables 1 through 4; and filtering the solution by a 0.8 μm membrane filter to avoid jamming of the printer.

The following shows the viscosity of the aforementioned ink composition sets having been prepared (measuring temperature at 25 °C) for each color. It shows the variations of the viscosity levels at the maximum and minimum ink viscosity.

Ink composition set 1: 22 through 26 mPa.s

Ink composition set 2: 28 through 33 mPa.s

Ink composition set 3: 24 through 27 mPa.s

Ink composition set 4: 27 through 31 mPa.s

Table 1

| | Ink composition (percent by mass) | | | | | | | | |
|---|---|---|---|---|---|---|---|---|---|
| | Ink type | Coloring material | | Photo-polymerizable compound | | | Acid proliferation agent | Photo-oxygenation agent | Dispersant |
| | | Type | Amount to be added | *E1 | *0 | | | | |
| | | | | Seroxide 3000 | OXT-221 | OXT-211 | Compound 1 | UV16992 | PB822 |
| *1 | K | Coloring material 1 | 4.0 | 25.0 | 40.0 | 20.0 | 3.0 | 5.0 | 3.0 |
| | C | Coloring material 2 | 4.0 | 18.5 | 50.0 | 20.0 | 1.5 | 3.0 | 3.0 |
| | M | Coloring material 3 | 5.0 | 17.5 | 50.0 | 20.0 | 1.5 | 3.0 | 3.0 |
| | Y | Coloring material 4 | 5.0 | 17.5 | 50.0 | 20.0 | 1.5 | 3.0 | 3.0 |
| | W | Coloring material 5 | 5.0 | 25.5 | 40.0 | 20.0 | 1.5 | 5.0 | 3.0 |

*1: Ink composition set 1 (Comparative Example)

Table 2

| * | Ink composition (percent by mass) | | | | | | | | | | | | | |
|---|---|---|---|---|---|---|---|---|---|---|---|---|---|---|
| | Ink type | Coloring material | | Photo-polymerizable compound | | | | *5 | Basic compound | Surface active agent | | 1* | *6 | Dispersant |
| | | Type | Amount to be added | *E1 | *E2 | *0 | | ** 2 | *2 | OP-85R | F470 | | | |
| | | | | Seroxide 3000 | E-4030 | ** E-4 | OXT-211 | | | | | | ** I-3 | PB822 |
| * | K | Coloring material 1 | 4.0 | 11.7 | 15.0 | 40.0 | 15.0 | 3.0 | 0.20 | 0.10 | 0.02 | 5.0 | 3.0 | 3.0 |
| | C | Coloring material 2 | 4.0 | 16.7 | 15.0 | 35.0 | 15.0 | 3.0 | 0.20 | 0.10 | 0.02 | 5.0 | 3.0 | 3.0 |
| | M | Coloring material 3 | 5.0 | 15.7 | 15.0 | 35.0 | 15.0 | 3.0 | 0.20 | 0.10 | 0.02 | 5.0 | 3.0 | 3.0 |
| | Y | Coloring material 4 | 5.0 | 15.7 | 15.0 | 35.0 | 15.0 | 3.0 | 0.20 | 0.10 | 0.02 | 5.0 | 3.0 | 3.0 |
| | W | Coloring material 5 | 5.0 | 5.7 | 20.0 | 40.0 | 15.0 | 3.0 | 0.20 | 0.10 | 0.02 | 5.0 | 3.0 | 3.0 |

*: Ink composition set 2 (Present invention), **: Compound
*5: Acid proliferation agent, *6: Photooxygenation agent

Table 3

| * | Ink composition (percent by mass) | | | | | | | | | | |
|---|---|---|---|---|---|---|---|---|---|---|---|
| | Ink type | Coloring material | | Photo-polymerizable compound | | Acid proliferation agent | Basic compound | Surface active agent | *3 | ** | Dispersant |
| | | Type | Amount to be added | *0 | | | | | | | |
| | | | | Compound E-1 | Compound E-13 | Compound 1 | *2 | TF907 | | Compound S-7 | PB822 |
| | K | Coloring material 1 | 4.0 | 61.9 | 20.0 | 3.0 | 0.1 | 0.02 | 5.0 | 3.0 | 3.0 |
| | C | Coloring material 2 | 4.0 | 63.4 | 20.0 | 1.5 | 0.1 | 0.02 | 5.0 | 3.0 | 3.0 |
| | M | Coloring material 3 | 5.0 | 62.4 | 20.0 | 1.5 | 0.1 | 0.02 | 5.0 | 3.0 | 3.0 |
| | Y | Coloring material 4 | 5.0 | 62.4 | 20.0 | 1.5 | 0.1 | 0.02 | 5.0 | 3.0 | 3.0 |
| | W | Coloring material 5 | 5.0 | 62.4 | 20.0 | 1.5 | 0.1 | 0.02 | 5.0 | 3.0 | 3.0 |

*: Ink composition set 3 (Present invention)
**: Photooxygenation agent

Table 4

| * | Ink composition (percent by mass) | | | | | | | | | | | | | |
|---|---|---|---|---|---|---|---|---|---|---|---|---|---|---|
| | Ink type | Coloring material | | Photo-polymerizable compound | | | | | Basic compound | Surface active agent | | *3 | ** | Dispersant |
| | | Type | Amount to be added | *E3 | *E1 | *0 | | | | | | | | |
| | | | | Vikoflex 9010 | LDO | OXT-221 | RSOX | Compound E-2 | *2 | F470 | TF907 | | *** | PB822 |
| * | K | Coloring material 1 | 4.0 | 12.9 | 30.0 | 25.0 | 10.0 | 6.0 | 0.10 | 0.02 | 0.02 | 3.0 | 4.0 | 5.0 |
| | C | Coloring material 2 | 4.0 | 12.9 | 30.0 | 25.0 | 10.0 | 6.0 | 0.10 | 0.02 | 0.02 | 3.0 | 4.0 | 5.0 |
| | M | Coloring material 3 | 5.0 | 11.9 | 30.0 | 25.0 | 10.0 | 6.0 | 0.10 | 0.02 | 0.02 | 3.0 | 4.0 | 5.0 |
| | Y | Coloring material 4 | 5.0 | 11.9 | 30.0 | 25.0 | 10.0 | 6.0 | 0.10 | 0.02 | 0.02 | 3.0 | 4.0 | 5.0 |
| | W | Coloring material 5 | 5.0 | 11.9 | 30.0 | 25.0 | 10.0 | 6.0 | 0.10 | 0.02 | 0.02 | 3.0 | 4.0 | 5.0 |

*: Ink composition set 4 (Present invention), **: Photooxygenation agent
***: $PF_6$- in formula [13]

[Chemical formula 16]

Compound 1

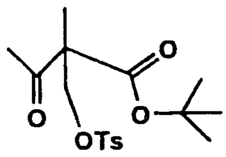

Compound 2

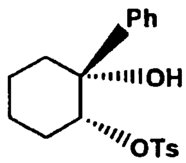

Ts :

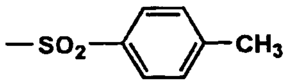

The following illustrates the details of the indications of the inks and compounds listed in Table 1 through 4:

K: Dark black ink
C: Dark cyan ink
M: Dark magenta ink
Y: Dark yellow ink
W: White ink
Coloring material 1: C. I. Pigment Black 7
Coloring material 2: C. I. Pigment Blue 15 : 3
Coloring material 3: C. I. Pigment Red 57 : 1
Coloring material 4: C. I. Pigment Yellow 13
Coloring material 5: Titanium oxide (anatase type average particle diameter: 0.20 μm)

[Photo-polymerizable compound]

*E1: alicyclic epoxy compound
Seroxide 3000 by Daicel Chemical Industries
LOD: by ATOFINA
*E2: Epoxidized fatty acid isobutyl
E-4030: Sansocizer E-4030 (Epoxidized fatty acid butyl by Shinnihon Rika Co., Ltd.)
*E3: Epoxidized soy bean oil
Vikoflex 9010: by ATOFINA
*O: oxetane compound
OXT-211: 3-ethyl-3-(phenoxy methyl) oxetane (by Toagosei Co., Ltd.)
OXT-221: di[1-ethyl(3-oxetanyl)]methylether (by Toagosei Co., Ltd.)
RSOX: by Toagosei Co., Ltd.

[Photooxy-generating agent]

UVI 6992: triphenyl sulfonium salt
(Silacure UVI 6992 by Union Carbide Co., Ltd.) propylene carbonate 50% solution

[Surface active agent]

OP-85R: nonione OP-85R (sorbitane ester type nonionic surfactant)
Sorbitane trioleate HLB = 1.8 (by NOF Corp.)
F470: Megafax F470, acryl oligomer containing the perfluoro alkyl group (by Dainippon Ink and Chemicals Incorporated)
TF907: Megafax EXP TF90, ethylene oxide additive containing the perfluoro alkyl group (by Dainippon Ink and Chemicals Incorporated)

[Dispersant]

PB822: by Ajinomoto FineTechno Inc.

[Others]

*1: Propylene carbonate (reagent by Kanto Kagaku Co., Ltd.)
*2: Tributyl amine (basic compound)
*3: γ-butylolactone (reagent by Kanto Kagaku Co., Ltd.)

«Adjustment of the amount of water contained in the ink composition set»

By taking the steps of stirring each of the ink composition sets having been prepared according to the aforementioned procedure in an environment of 20 °C and 80% RH, and changing the time of processing as required, the ink composition sets 1A, 1B, 1C, 1D, 1E through 4A, 4B, 4C, 4D and 4E were prepared wherein the percentage of water contained in ink is 0.75 percent by mass (A), 1.60 percent by mass (B), 3.00 percent by mass (C), 4.85 percent by mass (D) and 6.00 percent by mass (E).

«Storage of ink composition set by heating»

A glass container was filled with the ink composition sets with the water content having been adjusted in the aforementioned procedure and was stoppered and sealed. It was then stored in a thermostatic bath of 70 °C for one week. Thus, the ink composition sets having been subjected to the process of heating and storage were obtained.

«Inkjet image forming method »

A line head type inkjet recording apparatus, structured as shown in Fig. 2, equipped with a piezo type inkjet nozzle was filled with the ink composition sets 1A, 1B, 1C, 1D, 1E through 4A, 4B, 4C, 4D and 4E having been subjected to the process of adjusting the aforementioned water content and the ink composition sets having been heat-treated. The following images were recorded on a longer polyethylene terephthalate film having a surface energy of 53 mN/m, a width of 600 mm and a length of 500 m on a continuous basis. The ink supply system is made up of an ink tank, a supply pipe, a front-chamber ink tank located immediately before the head, a piping with a filter and piezo head. The portion from the front chamber tank to the head was heat-insulated, and a process of heating was provided at 50 °C. The piezo head was driven to emit the multisized dots of 2 through 15 pl at a resolution of 720 x 720 dpi so that ink was emitted on a continuous basis. After the ink had been emitted, inks were cured by the ultraviolet rays applied from the hot cathode tube as a light source instantaneously (for less than 2 seconds after emission) through the lamp units located on both sides of the carriage. Thus, images were formed. After the images were recorded, the overall thickness of ink film was measured. The thickness was in the range from 2.3 through 13 μm. It should be noted that "dpi" refers to the number of dots per 2.54 cm in the present invention.

«Ink evaluation»

[Evaluation of ink dispersion stability]

The liquid status of the aforementioned inks having been prepared and subjected to the process of heating storage was checked by visual observation and the dispersion stability was evaluated according to the following criteria.

A: No precipitate or change in viscosity
B: No precipitate but a slight increase in viscosity
C: Precipitate and coagulum clearly visible

[Evaluation of emission stability]

The aforementioned inks having been prepared and subjected to the process of heating storage were emitted on a continuous basis by the aforementioned inkjet recording apparatus for 30 minutes. After that, visual observation was conducted to check for the presence or absence of a nozzle. Emission stability was evaluated according to the following criteria.

A: No insufficiency of nozzle after continuous 30-minute emission
B: No insufficiency of nozzle after continuous 30-minute emission, but satellite occurs.
C: Insufficiency of nozzle after continuous 30-minute emission

«Evaluation of inkjet recorded image»

Each image having been recorded by the aforementioned image forming method was evaluated as follows:
The inks of Y, M, C and K colors were used to print the 6-point MS Mincho typeface characters at the target density, and the irregularities of characters were enlarged by a magnifier. The character quality was evaluated according to the following criteria.

A: No irregularities of characters
B: Slight irregularities of characters
C: Irregularities of characters are observable, but characters can be identified. Usable only with difficulty.
D: Not usable because of serious irregularities of characters and blurred characters

[Evaluation of color mixing (bleeding)]

Printing was performed at 720 dpi in such a way that one dot of each of the Y, M, C and K colors is adjacent to each other, and each of the adjacent color dots was enlarged by a magnifier to visually check for color mixing resulting from bleeding. Color mixing was evaluated according to the following criteria.

A: Adjacent dots are kept in a form of perfect circle without bleeding.
B: Adjacent dots are kept approximately in a form of perfect circle, almost without bleeding.
C: Adjacent dots slightly blurred and the dot form slightly out of order. Usable only with difficulty.
D: Adjacent dots are blurred and mixed with each other beyond practical use.

Table 5 shows the result of evaluation according to the aforementioned criteria:

Table 5

| Ink composition set | Percentage of water contained in ink (%) | Without heating storage | | With heating storage | | | | Remarks |
|---|---|---|---|---|---|---|---|---|
| | | Character quality | Color mixing persion (bleeding) | Dispersion stability | Emission stability | Character quality | Color mixing (bleeding) | |
| 1A | 0.75 | B | B | B | B | C | D | Comp. |
| 1B | 1.60 | B | B | C | C | C | D | Comp. |
| 1C | 3.00 | B | B | C | C | D | D | Comp. |
| 1D | 4.85 | B | B | C | C | D | D | Comp. |
| 1E | 6.00 | C | C | C | C | D | D | Comp. |
| 2A | 0.75 | C | B | C | B | D | B | Comp. |
| 2B | 1.60 | B | B | A | A | B | B | Inv. |
| 2C | 3.00 | B | B | A | A | B | B | Inv. |
| 2D | 4.85 | B | B | B | B | B | C | Inv. |
| 2E | 6.00 | B | B | C | C | C | D | Comp. |
| 3A | 0.75 | B | B | C | B | D | B | Comp. |
| 3B | 1.60 | A | A | A | A | B | B | Inv. |
| 3C | 3.00 | A | A | A | A | A | A | Inv. |
| 3D | 4.85 | A | A | B | B | B | B | Inv. |
| 3E | 6.00 | B | C | C | C | C | D | Comp. |
| 4A | 0.75 | C | B | C | B | D | B | Comp. |
| 4B | 1.60 | A | A | A | A | A | B | Inv. |
| 4C | 3.00 | A | A | A | A | A | A | Inv. |
| 4D | 4.85 | A | A | B | B | A | B | Inv. |
| 4E | 6.00 | B | C | C | C | C | D | Comp. |

Inv.: Invention, Comp.: Comparative example

As is apparent from Table 5, when compared with the Comparative Example, the image forming method of the structure conforming to the present invention ensures excellent ink dispersion stability and emission stability despite a long-term storage at a high temperature, and provides excellent character quality of the formed image. Thus, a high-definition image free from color mixing (bleeding) is provided.

Example 2

«Heating storage of ink»

An ink storage container was filled with ink 4A through 4E prepared in Example 1 with the percentage of water content WR under the storage conditions of the void ratio SR and vapor pressure Pa (kPa) listed in Table 6. This was stored in a thermostatic bath of 70 °C for one week. Thus, inventors obtained the ink 4A' through 4E' having been subjected to the process of heating storage.
The following describes the details of various items described in Table 6.

<Storage conditions>

Storage container 1: Polyethylene-made storage container with aluminum deposited thereon
Storage container 2: Polyethylene-made storage container

<Vapor pressure control means>

For vapor pressure control, a saturated aqueous solution containing the following inorganic salt was used by connecting a polyethylene hose with aluminum deposited thereon to the gap of the storage container.

1: Vapor pressure was controlled by using the saturated aqueous solution containing sodium chloride.
2: Vapor pressure was controlled by using the saturated aqueous solution containing magnesium chloride.
3: Vapor pressure was controlled by using the saturated aqueous solution containing lithium chloride.

Table 6(Continued-1)

| Image number | Ink composition number | *1 | Storage container | Void ratio SR | Vapor pressure WP (kPa) | Vapor pressure control means | WP x WR/SR |
|---|---|---|---|---|---|---|---|
| 21 | 4A | 0.75 | 1 | 0.1 | 3.18 | 1 | 23.9 |
| 22 | 4A | 0.75 | 1 | 0.1 | 1.36 | 2 | 10.2 |
| 23 | 4A | 0.75 | 2 | 0.1 | 0.46 | 3 | 3.45 |
| 24 | 4A | 0.75 | 1 | 0.5 | 1.36 | 2 | 2.04 |
| 25 | 4A | 0.75 | 1 | 0.5 | 0.46 | 3 | 0.68 |
| 26 | 4B | 1.60 | 1 | 0.1 | 3.18 | 1 | 51.0 |
| 27 | 4B | 1.60 | 1 | 0.1 | 1.36 | 2 | 21.8 |
| 28 | 4B | 1.60 | 2 | 0.1 | 0.46 | 3 | 7.36 |
| 29 | 4B | 1.60 | 1 | 0.5 | 1.36 | 2 | 4.35 |
| 30 | 4B | 1.60 | 1 | 0.5 | 0.46 | 3 | 0.68 |
| 31 | 4C | 3.00 | 1 | 0.2 | 3.18 | 1 | 47.7 |
| 32 | 4C | 3.00 | 1 | 0.2 | 1.36 | 2 | 20.4 |
| 33 | 4C | 3.00 | 2 | 0.2 | 0.46 | 3 | 6.90 |
| 34 | 4C | 3.00 | 1 | 0.5 | 1.36 | 2 | 8.16 |
| 35 | 4C | 3.00 | 1 | 0.5 | 0.46 | 3 | 2.76 |
| 36 | 4D | 4.85 | 1 | 0.3 | 3.18 | 1 | 51.4 |
| 37 | 4D | 4.85 | 1 | 0.3 | 1.36 | 2 | 22.0 |
| 38 | 4D | 4.85 | 2 | 0.3 | 0.46 | 3 | 7.44 |
| 39 | 4D | 4.85 | 1 | 0.6 | 1.36 | 2 | 11.0 |
| 40 | 4D | 4.85 | 1 | 0.6 | 0.46 | 3 | 3.72 |
| 41 | 4E | 6.00 | 1 | 0.3 | 3.18 | 1 | 63.6 |
| 42 | 4E | 6.00 | 1 | 0.3 | 1.36 | 2 | 27.2 |
| 43 | 4E | 6.00 | 2 | 0.3 | 0.46 | 3 | 9.20 |
| 44 | 4E | 6.00 | 1 | 0.6 | 1.36 | 2 | 13.6 |
| 45 | 4E | 6.00 | 1 | 0.6 | 0.46 | 3 | 4.60 |

*1: Percentage of water contained in ink WR (%)

Table 6 (Continued-2)

| Image number | Heating storage provided | | | | Remarks |
|---|---|---|---|---|---|
| | Dispersion stability | Emission stability | Character quality | Color mixing (bleeding) | |
| 21 | C | B | D | B | Comparative example |
| 22 | C | B | D | C | Comparative example |
| 23 | C | C | D | D | Comparative example |
| 24 | C | D | D | D | Comparative example |
| 25 | C | C | D | D | Comparative example |
| 26 | A | A | A | B | Invention |
| 27 | A | A | A | B | Invention |
| 28 | A | B | A | B | Invention |
| 29 | B | A | B | C | Invention |
| 30 | B | B | B | C | Invention |
| 31 | A | A | A | A | Invention |
| 32 | A | A | A | A | Invention |
| 33 | A | A | A | A | Invention |
| 34 | A | A | A | A | Invention |
| 35 | B | B | B | C | Invention |
| 36 | B | B | A | B | Invention |
| 37 | B | B | A | B | Invention |
| 38 | B | B | B | B | Invention |
| 39 | B | B | A | B | Invention |
| 40 | B | B | C | C | Invention |
| 41 | C | C | C | D | Comparative example |
| 42 | C | C | C | D | Comparative example |
| 43 | C | C | D | D | Comparative example |
| 44 | C | C | D | D | Comparative example |
| 45 | C | C | D | D | Comparative example |

As is apparent from Table 6, when subjected to heating storage under the condition of WP x WR/SR exceeding 6.65, the ink with its compositions has a structure conforming to the present invention ensures provides excellent ink

dispersion stability and emission stability, as well as superb character quality of the formed image and outstanding resistance to color mixing (bleeding), after a long-term storage at a high temperature.

Example 3

Using each ink composition set, the present inventors evaluated the character quality of the image and resistance to color mixing (bleeding) according to the same procedure as those described in Examples 1 and 2, except that an oriented polypropylene film, polyvinyl chloride film and cast coated paper, instead of a polyethylene terephthalate film, were used as a recording material. It has been demonstrated that the ink composition set of the present invention provides excellent results, similarly to the results described with reference to Examples 1 and 2.

## Claims

1. An actinic radiation curable type inkjet ink **characterized in that** the actinic radiation curable type inkjet ink contains an onium salt as a photolytically acid generating agent that does not generate benzene when exposed to actinic radiation, and a compound including an oxetane ring as a photo-polymerizable compound and that a water content by Karl Fischer method is 1.50 through 5.00 percent by mass.

2. The actinic radiation curable type inkjet ink described in claim 1, **characterized in that** the actinic radiation curable type inkjet ink contains a basic compound.

3. The actinic radiation curable type inkjet ink described in any one of claims 1 and 2, **characterized in that** the onium salt that does not generate benzene is a sulfonium salt.

4. The actinic radiation curable type inkjet ink described in any one of claims 1 and 2, **characterized in that** the onium salt that does not produce benzene is an iodonium salt.

5. The actinic radiation curable type inkjet ink described in claim 3, **characterized in that** the sulfonium salt is at least one kind selected from sulfonium salts expressed by the following general formulas [1] through [4]:

General formula [1]

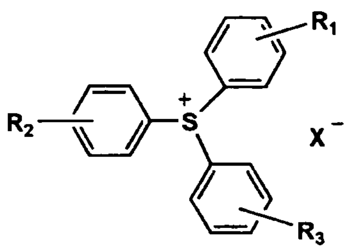

General formula [2]

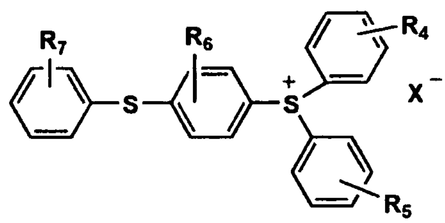

General formula [3]

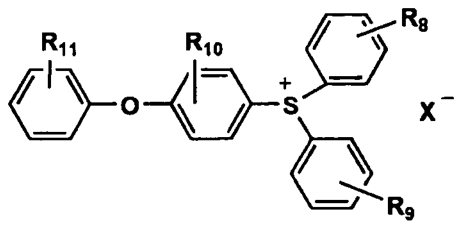

General formula [4]

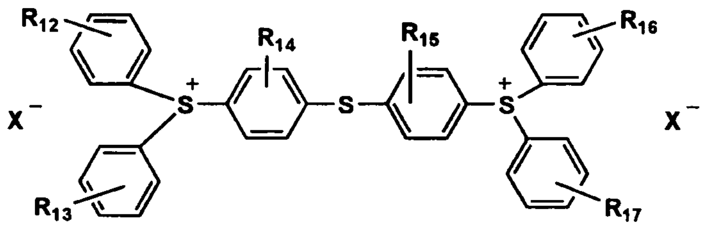

in the formulas, $R_1$ through $R_{17}$ represent a hydrogen atom or a substituent respectively, wherein none of $R_1$ through $R_3$ simultaneously represents a hydrogen atom, none of $R_4$ through $R_7$ simultaneously represents a hydrogen atom, none of $R_8$ through $R_{11}$ simultaneously represents a hydrogen atom, and none of $R_{12}$ through $R_{17}$ simultaneously represents a hydrogen atom, and X represents an anion residue of non-nucleophilicity.

**6.** The actinic radiation curable type inkjet ink described in claim 5, **characterized in that** the sulfonium salts expressed by the general formulas [1] through [4] are at least one kind selected from sulfonium salts represented by the following general formulas [5] through [13]:

General formula [5]

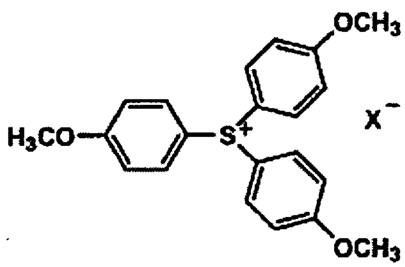

General formula [6]

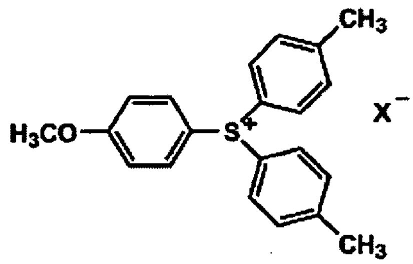

General formula [7]

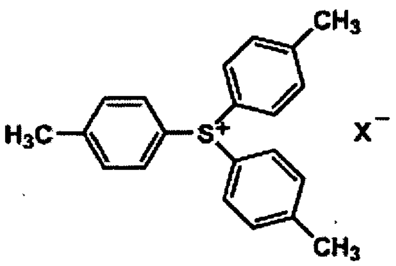

General formula [8]

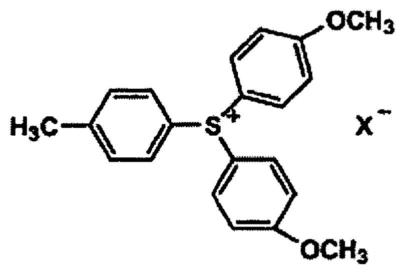

General formula [9]

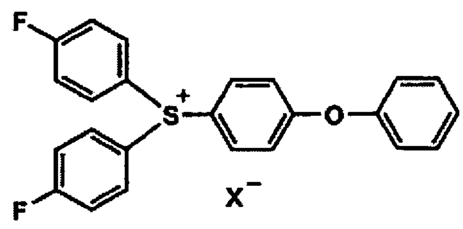

General formula [10]

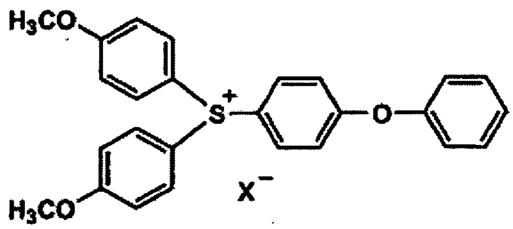

General formula [11]

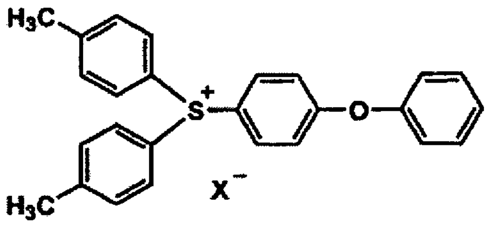

General formula [12]

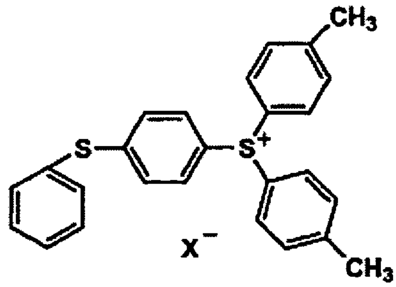

General formula [13]

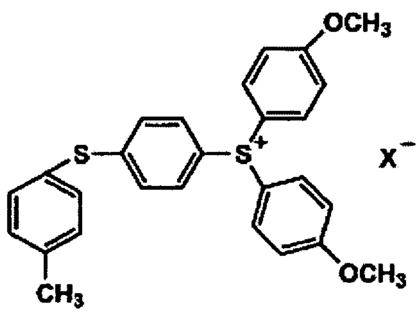

in each of the formulas, X represents an anion residue of non-nucleophilicity.

7. The actinic radiation curable type inkjet ink described in any one of claims 1 through 6, **characterized in that** the actinic radiation curable type inkjet ink contains a nonionic surfactant.

8. The actinic radiation curable type inkjet ink described in any one of claims 1 through 7, **characterized in that** the actinic radiation curable type inkjet ink contains a compound including at least one kind of an oxirane group as the photo-polymerizable compound.

9. The actinic radiation curable type inkjet ink described in any one of claims 1 through 8, **characterized in that** the

actinic radiation curable type inkjet ink contains a compound including at least one kind of an oxetane ring in an amount of from 60 to 95 percent by mass, a compound including at least one kind of an oxirane group in an amount of from 5 to 40 percent by mass, and at least one kind of a vinyl ether compound in an amount of from 0 to 40 percent by mass.

**10.** The actinic radiation curable type inkjet ink described in any one of claims 1 through 9, **characterized in that** the compound including an oxetane ring is represented by the following general formula (E):

General formula (E)

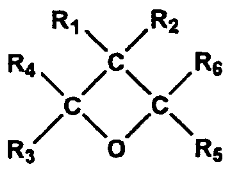

in the formula, $R_1$ through $R_6$ represents a hydrogen atom or a substituent, wherein at least one of groups expressed by $R_3$ through $R_6$ is a substituent.

**11.** The actinic radiation curable type inkjet ink described in any one of claims 1 through 10, **characterized in that** the actinic radiation curable type inkjet ink has a viscosity of 7 through 50 mPa·s at 25 °C.

**12.** A storage method for an actinic radiation curable type inkjet ink, **characterized in that** when storing the actinic radiation curable type inkjet ink described in any one of claims 1 through 11 in a storage container, a condition defining with the following formula (1) is satisfied:

$$\text{Formula (1)} \quad WP \times WR/SR > 6.65$$

where WR represents a water content (%) of the actinic radiation curable type inkjet ink according to Karl Fischer method, SR represents a ratio (void ratio) of the volume of a void space to the inner volume of the storage container in which the volume of the void space is obtained by subtracting the volume of the actinic radiation curable type inkjet ink from the inner volume of the storage container, and WP represents a vapor pressure (kPa) in the void space.

**13.** In an image forming method of conducting a printing on a recording material by jetting the actinic radiation curable type inkjet ink described in any one of claims 1 through 11 from an inkjet recording head on the recording material; the image forming method **characterized by** irradiating actinic radiation for 0.001 to 2.0 seconds after the actinic radiation curable type inkjet ink has reached on the recording material.

**14.** In an image forming method of conducting a printing on a recording material, by jetting the actinic radiation curable type inkjet ink described in any one of claims 1 through 11 from an inkjet recording head on the recording material; the image forming method **characterized in that** a total ink layer thickness is 2 to 20 μm after the actinic radiation curable type inkjet ink has reached on the recording material.

**15.** In an image forming method of conducting a printing on a recording material, by jetting the actinic radiation curable type inkjet ink described in any one of claims 1 through 11 from an inkjet recording head on the recording material; the image forming method **characterized in that** the amount of ink droplets emitted from each nozzle of the inkjet recording head is 2 through 15 pl.

**16.** In an inkjet recording apparatus for use with the image forming method described in any one of claims 13 through 15, the image forming method **characterized in that** the recording head jets the actinic radiation curable type inkjet ink after the actinic radiation curable type inkjet ink and the recording head are heated to 35 through 100 °C.

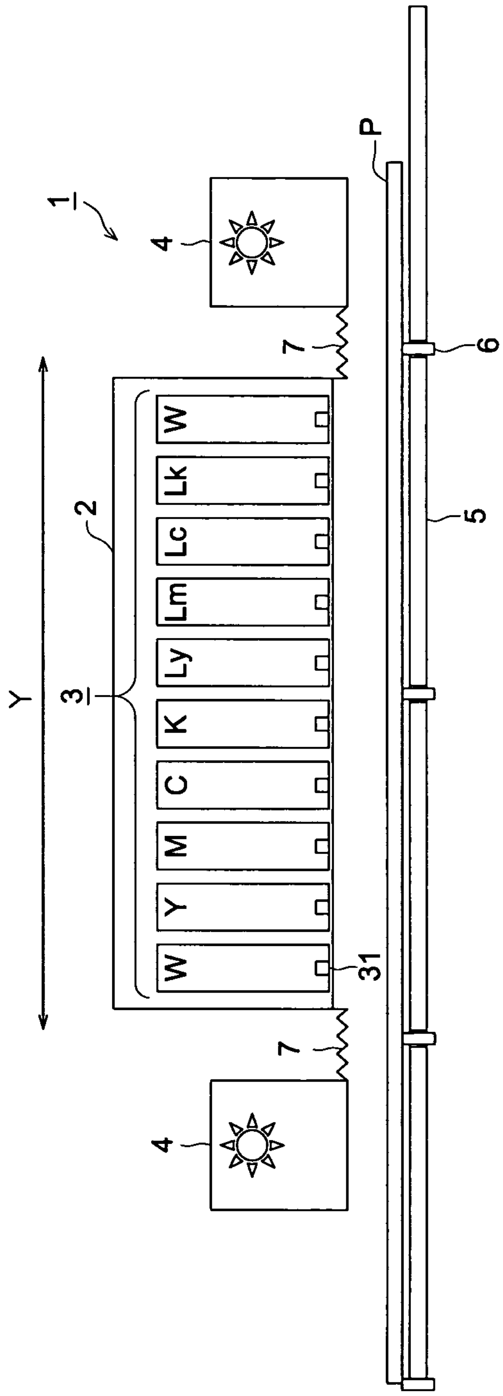


FIG. 1

FIG. 2

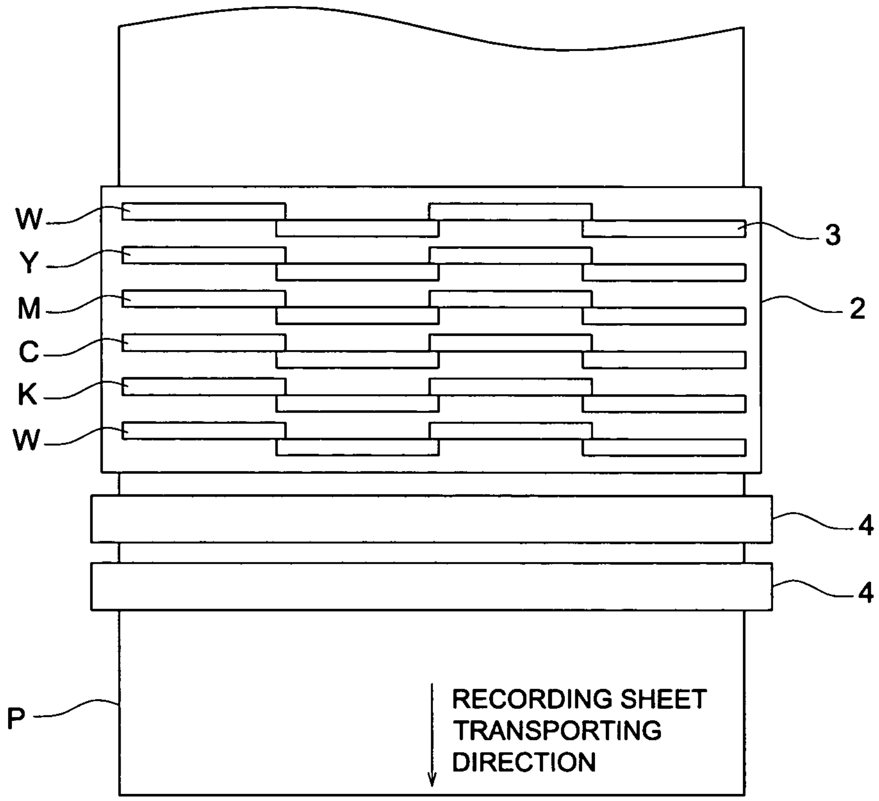

## INTERNATIONAL SEARCH REPORT

International application No.
PCT/JP2005/009621

A. CLASSIFICATION OF SUBJECT MATTER
Int.Cl$^7$ C09D11/00, B41J2/01, B41M5/00

According to International Patent Classification (IPC) or to both national classification and IPC

B. FIELDS SEARCHED

Minimum documentation searched (classification system followed by classification symbols)
Int.Cl$^7$ C09D11/00, B41J2/01, B41M5/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
REGISTRY(STN), CAplus(STN)

C. DOCUMENTS CONSIDERED TO BE RELEVANT

| Category* | Citation of document, with indication, where appropriate, of the relevant passages | Relevant to claim No. |
|---|---|---|
| Y | JP 2003-251798 A (Konica Corp.), 09 September, 2003 (09.09.03), Claims 1 to 4, 12; Par. Nos. [0001], [0023], [0029], [0072] to [0074], [0087]; table 3 (Family: none) | 1-4,7-16 |
| Y | JP 2003-252979 A (Riso Kagaku Kogyo Kabushiki Kaisha), 10 September, 2003 (10.09.03), Claims 1 to 4, 6 to 7; table 1; Par. Nos. [0006], [0044] (Family: none) | 1-16 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 September, 2005 (26.09.05) | 11 October, 2005 (11.10.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

INTERNATIONAL SEARCH REPORT

International application No.
PCT/JP2005/009621

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-137172 A (Konica Minolta Holdings Kabushiki Kaisha),<br>13 May, 2004 (13.05.04),<br>Claim 12<br>(Family: none) | 1-16 |
| Y | JP 64-16802 A (Tomoegawa Paper Co., Ltd.),<br>20 January, 1989 (20.01.89),<br>Page 4<br>(Family: none) | 5-6 |
| Y | JP 04-349464 A (Nippon Telegraph And Telephone Corp.),<br>03 December, 1992 (03.12.92),<br>Par. No. [0038]<br>(Family: none) | 5-6 |
| Y | JP 10-1507 A (Toyo Ink Manufacturing Co., Ltd.),<br>06 January, 1998 (06.01.98),<br>Par. No. [0082]; table 1<br>(Family: none) | 5-6 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5054667 B
- JP 6200204 A
- JP 2000504778 A
- JP 2001220526 A
- JP 2002188025 A
- JP 2002317139 A
- JP 2001310937 A
- JP 6009714 A
- JP 2001031892 A
- JP 2001040068 A
- JP 2001055507 A
- JP 2001310938 A
- JP 2001 A
- JP 220526 A
- JP 60132767 A
- US 6145979 A


### Non-patent literature cited in the description


- THE CHEMICAL SOCIETY OF JAPAN. 1998, vol. 71
- Imezingu yo Yuuki Zairyo. Bunshin Shuppan, 1993
- **HU XIANMING ; RICHARD M. KELLOGG.** *Synthesis,* 535-538
- **A. O. FITTON ; J. HILL ; D. EJANE ; R. MILLER.** *Synth,* vol. 12, 1140 3
- **TOSHIRO IMAI ; SHINYA NISHIDA.** *Can. J. Chem.,* 1981, vol. 59, 2503-2509
- **NOBUJIRO SHIMIZU ; SHINTARO YAMAOKA ; YUHO TSUNO.** *Bull. Chem. Soc. Jpn.,* vol. 56, 3853-3854
- **WALTER FISHER ; CYRIL A. GROB.** *Helv. Chim. Acta.,* vol. 61, 2336
- *Chem., Ber.,* vol. 101, 1850
- Heterocyclic Compounds with Three- and Four-membered Rings. Interscience Publishers, John Wiley & Sons
- **H. A. J. CURLESS.** Synthetic Organic Photochemistry. Plenum
- **M. BRAUN.** *Nachr. Chem. Tech. Lab.,* vol. 33, 213
- **S. H. SCHROETER.** *J. Org. Chem.,* vol. 34 (5), 1181
- **D. R. ARNOLD.** *Adv. Photochem.,* vol. 6, 301
- Heterocyclic Compounds With Three -and-Four-membered Rings. Interscience Publisher, John Wiley & Sons